# EUROPEAN PATENT APPLICATION

(11) **EP 4 679 246 A1**
(43) Date of publication of application: **14.01.2026**
(21) Application number: 24767284.3
(22) Date of filing: 23.01.2024
(51) Int. Cl.: G06F 3/04842, G06T 19/00, G06F 3/0481, G06F 3/00, G06F 3/01, G06F 1/16

(54) **ELECTRONIC DEVICE AND METHOD FOR PROVIDING EXTERNAL IMAGE**

(30) Priority: 06.03.2023 KR 20230029466; 05.04.2023 KR 20230045052
(71) Applicant: Samsung Electronics Co., Ltd., Suwon-si, Gyeonggi-do 16677 (KR)
(72) Inventor: KIM, Jooyoung, Suwon-si Gyeonggi-do 16677 (KR); KIM, Daehee, Suwon-si Gyeonggi-do 16677 (KR); YEOM, Donghyun, Suwon-si Gyeonggi-do 16677 (KR); KIM, Sungoh, Suwon-si Gyeonggi-do 16677 (KR); LEE, Boyoung, Suwon-si Gyeonggi-do 16677 (KR)
(74) Representative: Nederlandsch Octrooibureau
(86) International application number: PCT/KR2024/001092
(87) International publication number: WO 2024/185995

(57) **Abstract**

A wearable device according to embodiments may comprise: a camera; a display; at least one processor; and a memory storing instructions. The instructions may, when executed by the at least one processor, cause the wearable device to: receive, while a virtual space is displayed on the display, an input for requesting display, on the display, of an external object within an external space around the wearable device; identify metadata corresponding to the external object designated by the input; identify a first area regarding movement of the external object, from the metadata on the basis of the identification of the metadata; identify a first image portion of a first image, which corresponds to the first area within the first image obtained by the camera; and change a first virtual space, which corresponds to the first area within the virtual space and is displayed on the display, to the first image portion of the first image.

## Description

### [Technical Field]

The present disclosure relates to an electronic device and a method for providing an external image.

### [Background Art]

An external object in an image for providing a virtual reality (VR), an augmented reality (AR), and/or a mixed reality (MR) may be identified. Information on the external object may be reflected in a graphic by being inputted to a processor.

The above-described information may be provided as a related art for the purpose of helping understanding of the present disclosure. No argument or decision is made as to whether any of the above description may be applied as a prior art related to the present disclosure.

### [Disclosure]

### [Technical Solution]

According to embodiments, a wearable device is provided. The wearable device may comprise a camera, a display, at least one processor, and memory that stores instructions. The instructions, when executed by the at least one processor, may cause the wearable device to receive an input for requesting to display an external object located in an external space around the wearable device on the display while a virtual space is displayed on the display, identify metadata corresponding to the external object designated by the input, based on the identification of the metadata, identify, from the metadata, a first area regarding movement of the external object, in a first image obtained through the camera, identify a first image portion of the first image corresponding to the first area, and change a first virtual-space portion, which corresponds to the first area within the virtual space and is displayed on the display, into the first image portion of the first image. The first image portion of the first image may include a visual object corresponding to the external object.

In embodiments, a wearable device is provided. The wearable device may comprise a camera, a display, at least one processor, and memory that stores instructions. The instructions, when executed by the at least one processor, may cause the wearable device to receive an input for designating that an external object is to be displayed through the display while a virtual space is displayed on the display, based on the input, identify, in a first image obtained through the camera, metadata that includes the external object and characteristics and a size of the external object, and change a first virtual-space portion, which corresponds to the first area within the virtual space and is displayed on the display into a first object area, which is identified based on the metadata and corresponds to a first area regarding movement of the external object. The first object area may include a visual object corresponding to the external object.

According to embodiments, a non-transitory computer-readable recording medium is provided. The non-transitory computer-readable recording medium may store instructions to, when executed by at least one processor, cause a device to perform operations comprising, while a virtual space is displayed on a display, receiving an input for requesting to display an external object located in an external space around the wearable device on the display, identifying metadata corresponding to the external object designated by the input, based on the identification of the metadata, identifying, from the metadata, a first area regarding movement of the external object, in a first image obtained through a camera, identifying a first image portion of the first image corresponding to the first area, and changing a first virtual-space portion, which corresponds to the first area within the virtual space and is displayed on the display, into the first image portion of the first image. The first image portion of the first image may include a visual object corresponding to the external object.

According to embodiments, a non-transitory computer-readable recording medium is provided. The non-transitory computer-readable recording medium may store instructions to, when executed by at least one processor, cause a device to perform operations comprising receiving an input for designating that an external object is to be displayed through the display while a virtual space is displayed on the display, based on the input, identifying, in a first image obtained through a camera, metadata that includes the external object and characteristics and a size of the external object, and changing a first virtual-space portion, which corresponds to the first area within the virtual space and is displayed on the display into a first object area, which is identified based on the metadata and corresponds to a first area regarding movement of the external object. The first object area may include a visual object corresponding to the external object.

According to embodiments, a wearable device may comprise a camera, memory, a display, and at least one processor. The at least one processor may be configured to, while a virtual space is displayed on the display, receive an input for requesting to display an external object located in an external space around the wearable device on the display. The at least one processor may be configured to identify metadata corresponding to the external object designated by the input. The at least one processor may be configured to, based on the identification of the metadata, identify, from the metadata, a first area regarding movement of the external object. The at least one processor may be configured to, in a first image obtained through a camera, identify a first image portion 403 and 709 of the first image corresponding to the first area. The at least one processor may be configured to change a first virtual-space portion, which corresponds to the first area within the virtual space and is displayed on the display, into the first image portion of the first image. The first image portion of the first image may include a visual object corresponding to the external object.

According to an embodiment, a wearable device may comprise a camera, memory, a display, and at least one processor. The at least one processor may be configured to receive an input for designating that an external object is to be displayed through the display while a virtual space is displayed on the display. The at least one processor may be configured to, based on the input, identify, in a first image obtained through the camera, metadata that includes the external object and characteristics and a size of the external object. The at least one processor may be configured to change a first virtual-space portion, which corresponds to the first area within the virtual space and is displayed on the display into a first object area, which is identified based on the metadata and corresponds to a first area regarding movement of the external object. The first object area may include a visual object corresponding to the external object.

According to an embodiment, a method performed by a wearable device may comprise, while a virtual space is displayed on a display, receiving an input for requesting to display an external object located in an external space around the wearable device on the display. The method may comprise identifying metadata corresponding to the external object designated by the input. The method may comprise, based on the identification of the metadata, identifying, from the metadata, a first area regarding movement of the external object. The method may comprise, in a first image obtained through a camera, identifying a first image portion of the first image corresponding to the first area. The method may comprise changing a first virtual-space portion, which corresponds to the first area within the virtual space and is displayed on the display, into the first image portion of the first image. The first image portion of the first image may include a visual object corresponding to the external object.

### [Description of the Drawings]

FIG. 1 illustrates an example of a screen displayed by a wearable device, according to an embodiment.
FIG. 2 illustrates an example of a block diagram of a wearable device, according to an embodiment.
FIG. 3 illustrates a flow of an operation of an electronic device for display-overlapping an image of an external object on a screen, according to an embodiment.
FIG. 4A illustrates an example of movement of an external object in an external image, according to an embodiment.
FIG. 4B illustrates an example of image movement of an external object within a virtual space, according to an embodiment.
FIG. 5 illustrates an example of an external object identified in an image, according to an embodiment.
FIG. 6A illustrates an example of a change of an external object in an external image according to an embodiment.
FIG. 6B illustrates an example of an image change of an external object in a virtual space according to an embodiment.
FIG. 7 illustrates an example of a segmentation of an external object, according to an embodiment.
FIG. 8A illustrates an example of a setting for images for a plurality of external objects, according to an embodiment.
FIG. 8B illustrates an example of a virtual space according to a setting for images for a plurality of external objects, according to an embodiment.
FIG. 9 illustrates an example of a virtual space according to a position range of an external object, according to an embodiment.
FIG. 10 illustrates a flow of an operation of an electronic device for display-overlapping an image of an external object on a screen, according to an embodiment.
FIG. 11A illustrates a flow of an operation of an electronic device for indicating a segmentation of an external object in a virtual space, according to an embodiment.
FIG. 11B illustrates a flow of an operation of an electronic device for indicating a combination of an external object in a virtual space, according to an embodiment.
FIG. 12 illustrates a flow of an operation of an electronic device for fetching an image corresponding to an external object based on identifying a part of the external object, according to an embodiment.
FIG. 13A illustrates an example of a perspective view of a wearable device, according to an embodiment.
FIG. 13B illustrates an example of one or more hardware disposed in a wearable device, according to an embodiment.
FIG. 14A to 14B illustrate an example of an exterior of a wearable device, according to an embodiment.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term referring to a signal (e.g., a signal, information, a message, or a signaling), a term referring to an external object (e.g., an external object, an object, a thing, an item, or a target), a term referring to a virtual space, a term referring to a component of a device, and the like, used in the following description are exemplified for convenience of a description. Therefore, the present disclosure is not limited to terms to be described below, and another term having an equivalent technical meaning may be used.

In addition, a term such as '...unit', '...device', '...object', and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

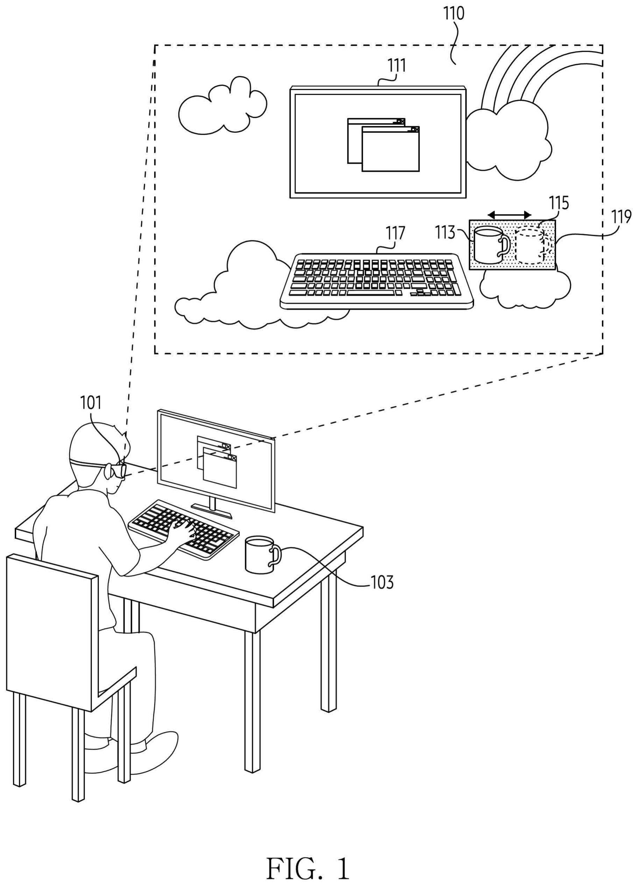

FIG. 1 illustrates an example of a screen displayed by a wearable device, according to an embodiment.

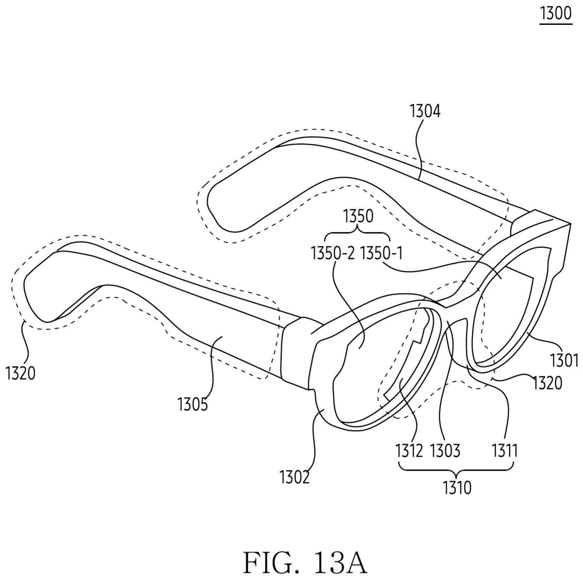

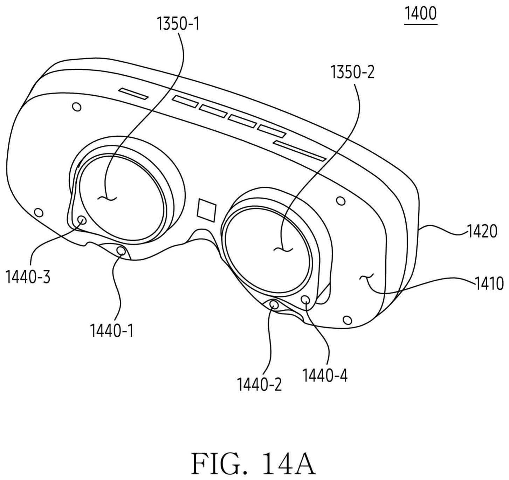

According to an embodiment, the wearable device 101 may include a head-mounted display (HMD) wearable on a head of a user. An example of a structure of the wearable device 101 wearable on the head of the user will be described with reference to FIGS. 13A to 13B and/or 14A to 14B. The wearable device 101 may be referred to as an electronic device. For example, the electronic device may form an HMD, by being combined with an accessory to be attached to the head of the user.

According to an embodiment, the wearable device 101 may execute an application for a virtual space. The wearable device 101 may provide the user with contents in the virtual space through the application. For example, the wearable device 101 may provide the user with contents for providing a visual reality (VR) game through the application. For example, the wearable device 101 may provide the user with a user interface (UI) in the virtual space for increasing work efficiency through the application. In a state in which the user wears the wearable device 101, the wearable device 101 may include a display disposed on a first surface of the housing facing the eye. According to an embodiment, the wearable device 101 may provide the user with the virtual reality (VR), by displaying a screen for the virtual space in the display disposed on the first surface.

According to an embodiment, the wearable device 101 may execute a function related to a pass through (PT). The wearable device 101 may include a camera disposed on a second surface opposite to the first surface. Through the camera, the wearable device 101 may obtain images including an external object. The wearable device 101 may display overlappingly the image portion including the external object on the screen in the display disposed on the first surface. The PT executed by the wearable device 101 may include displaying the image portion corresponding to the external object on the display in the virtual space. The image portion corresponding to the external object may be referred to as a PT area. The wearable device 101 may display the image portion corresponding to the PT area on the display to overlap the virtual space. For example, the wearable device 101 may display the image portion corresponding to the PT area on the display. The wearable device 101 may cease displaying the virtual-space portion overlapping the PT area on the display.

According to an embodiment, the wearable device 101 may execute a function related to an augmented reality (AR) and/or a mixed reality (MR). In a state in which the user wears the wearable device 101, the wearable device 101 may include at least one lens disposed adjacent to eyes of the user. The wearable device 101 may couple an ambient light passing through the lens with light emitted from the display of the wearable device 101. Since the wearable device 101 couples the ambient light and the light emitted from the display, the user may see an image in which a real object recognized by the ambient light and a virtual object formed by the light emitted from the display are mixed. The wearable device 101 may designate an area in which the virtual object is not formed.

Referring to FIG. 1, the wearable device 101 may provide the user with the virtual reality, by displaying a screen 110 for the virtual space. A visual object (e.g., a visual object 111, a visual object 113, a visual object 115, or a visual object 117) displayed together with the screen 110 for the virtual space may correspond to the external object. A first virtual-space portion 119 may correspond to an image portion corresponding to an area regarding movement of an external object 103. The area regarding the movement of the external object 103 may include an area on an external space where the external object 103 is positioned.

According to an embodiment, when the wearable device 101 displays only the virtual space for providing the virtual reality (VR) on the display, external objects outside the wearable device 101 may not be displayed on the display. Therefore, when the wearable device 101 displays only the virtual space on the display, the user may not recognize the objects and events outside the wearable device 101. While the user is wearing the wearable device 101, the wearable device 101 may display the external object 103 together with the virtual space on the display.

According to an embodiment, the wearable device 101 may display the screen 110 indicating the virtual space on the display. According to an embodiment, the wearable device 101 may display a virtual space (e.g., a space on a game in which a battle takes place) indicating a content (e.g., a game content) through the display. According to an embodiment, the wearable device 101 may indicate an interface (e.g., an interface for business environment improvement) for user convenience.

According to an embodiment, while displaying the screen 110 indicating the virtual space on the display, the wearable device 101 may obtain an image for the external space through the camera disposed on the second surface opposite to the first surface on which the display is disposed. The user may designate at least one external object 103. The wearable device 101 may display at least one pass through (PT) area corresponding to the at least one designated external object 103. The wearable device 101 may display the image for the external space on the display together with a portion indicating the virtual space. The wearable device 101 may display the image portion corresponding to the external object 103 on the display to overlap the virtual space. For example, the wearable device 101 may display the external object 103 within the external space on the display. The wearable device 101 may cease displaying the virtual space portion corresponding to a position of the external object 103 on the display.

According to an embodiment, the wearable device 101 may identify the area regarding the movement of the external object 103. For example, the wearable device 101 may identify the area regarding the movement of the external object 103 (e.g., a cup, a mouse, or a fan of an electric fan) for a designated time. The wearable device 101 may identify a first image portion of an image including the external object 103, based on the area regarding the movement. The area regarding the movement may correspond to the first image portion. According to an embodiment, the area regarding the movement of the external object 103 may include an area on the external space where the external object 103 is positioned for the designated time. For example, the wearable device 101 may identify an area corresponding to a position where the cup (e.g., the external object 103) has moved for the designated time. The wearable device 101 may display the first virtual-space portion 119 corresponding to the first image portion related to an area regarding movement of the cup (e.g., the external object 103) on the display together with the virtual space. The wearable device 101 may display the first virtual-space portion 119 corresponding to the area regarding the movement of the cup on the display to overlap the virtual space. For example, the wearable device 101 may cease displaying the virtual space portion overlapping the first virtual space portion 119 on the display.

Although it is described that in FIG. 1, the wearable device 101 identifies the visual object (e.g., the visual object 111, the visual object 113, the visual object 115, and/or the visual object 117), the area regarding the movement of the external object, and the first image portion corresponding to the area regarding the movement of the external object, an embodiment of the present disclosure may not be limited thereto. According to an embodiment, a server may identify the visual object, the area regarding the movement of the external object, and/or the first image portion. The server may transmit information including the visual object, the area regarding the movement of the external object, and/or the first image portion to the wearable device 101.

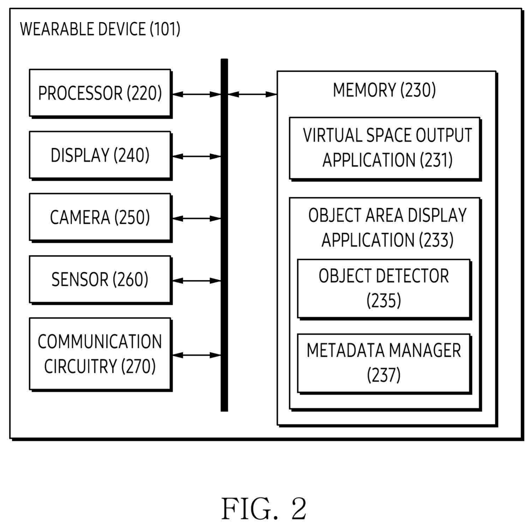

FIG. 2 illustrates an example of a block diagram of a wearable device, according to an embodiment. A wearable device 101 of FIG. 2 may include the wearable device 101 of FIG. 1.

Referring to FIG. 2, the wearable device 101 may include a processor 220, a display 240, a camera 250, a sensor 260, communication circuitry 270, and/or memory 230. For example, a virtual space output application 231 or an object area display application 233 may be stored in the memory 230. For example, the object area display application 233 may include an object detector 235 and/or a metadata manager 237. The processor 220, the display 240, the camera 250, the sensor 260, the communication circuitry 270, and the memory 230 may be electronically and/or operably coupled with each other by an electronical component such as a communication bus. Hereinafter, hardware being operably coupled may mean that a direct connection or an indirect connection between hardware is established by wire or wirelessly so that second hardware is controlled by first hardware among the hardware. Although illustrated based on different blocks, an embodiment is not limited thereto, and a portion (e.g., at least a portion of the processor 220, the memory 230, and the communication circuitry 270) of the hardware of FIG. 2 may be included in a single integrated circuit such as a system on a chip (SoC). A type and/or the number of the hardware included in the wearable device 101 is not limited as illustrated in FIG. 2. For example, the wearable device 101 may include only a part of hardware illustrated in FIG. 2.

According to an embodiment, the wearable device 101 may include hardware to process data based on one or more instructions. For example, the hardware to process the data may include an arithmetic and logic unit (ALU), a floating point unit (FPU), a field programmable gate array (FPGA), a central processing unit (CPU), and/or an application processor (AP). The processor 220 may have a structure of a single-core processor, or have a structure of a multi-core processor such as a dual core, a quad core, a hexa core, or octa core.

According to an embodiment, the processor 220 may display a virtual space on the display 240. The processor 220 may display a visual object (e.g., the visual object 111, the visual object 113, the visual object 115, or the visual object 117 of FIG. 1) corresponding to an external object on the display 240 together with the virtual space. For example, the processor 220 may display a game background space and a visual object (e.g., the visual object 113, or the visual object 115) corresponding to a cup, which is an external object (e.g., the external object 103) on the display 240 together. The processor 220 may store metadata corresponding to the external object 103 on the memory 230. For example, the metadata may include information on the external object 103, such as a type (or a class), color, a position, a range, and a red-green-blue (RGB) image, or a depth map of the external object 103. The processor 220 may receive an input designating the external object 103 (e.g., the cup) to be displayed on the display 240 through the communication circuitry 270. A user may designate the external object 103 through the input. For example, the user may designate an object (e.g., the cup placed on a desk) included in the obtained image as an external object. The processor 220 may identify the metadata corresponding to the external object 103 (e.g., the cup) designated by the input. Based on the identification of the metadata, the processor 220 may identify, from the metadata, an area regarding movement of the external object 103. For example, the area may be a position of the external object 103 for a designated time. The processor 220 may identify a first image portion of an image obtained through the camera 250 corresponding to the area. The first image portion may be an area in the image where the external object 103 may be positioned. The processor 220 may display the first image portion together with the virtual space on the display 240. The first image portion may include a visual object corresponding to the external object 103. The processor 220 may change a display portion corresponding to the area regarding the external object 103. The processor 220 may change a virtual space portion, which corresponds to the area within the virtual space, into the first image portion. For example, the processor 220 may change an object displayed through the display 240 by display-overlapping the first image portion on the virtual space portion. For another example, as display of the virtual-space portion corresponding to the position of the first image portion is ceased, the object displayed through the display 240 may be changed.

In an embodiment, the memory 230 may include a hardware component to store data and/or instruction inputted to and/or outputted from the processor 210 of the wearable device 101. For example, the memory 230 may include volatile memory such as random-access memory (RAM), and/or non-volatile memory such as read-only memory (ROM). For example, the volatile memory may include at least one of dynamic RAM (DRAM), static RAM (SRAM), or Cache RAM, and pseudo SRAM (PSRAM). For example, the non-volatile memory may include at least one of programmable ROM (PROM), erasable PROM (EPROM), electrically erasable PROM (EEPROM), flash memory, a hard disk, a compact disk, a solid state drive (SSD), or an embedded multi media card (eMMC).

According to an embodiment, the virtual space output application 231 may be stored in the memory 230. The processor 220 may display a virtual space (e.g., the universe, a space as a game background, or a space where a movie content proceeds) on the display 240 based on execution of the virtual space output application 231.

According to an embodiment, the processor 220 may detect the external object 103, based on execution of the object area display application 233. The processor 220 may identify a moving area of the external object 103 based on the execution of the object area display application 233. The processor 220 may store the metadata on the external object 103 based on the execution of the object area display application 233. For example, the processor 220 may identify, based on the execution of the object area display application 233, the presence or absence of a visual object corresponding to the cup , identify a moving area of the visual object 113 corresponding to the cup, and store information on the cup and information on the moving area of the cup in the metadata. However, an embodiment of the present disclosure may not be limited thereto.

According to an embodiment, the processor 220 may identify external objects in the image obtained from the camera 250 based on execution of the object detector 235. Identifying the external object 103 by the processor 220 may include determining at least one class corresponding to the external object 103 among a plurality of classes for classifying the external object 103. The plurality of classes may be classified by different types of the external object 103, such as a cup, a monitor, and/or a keyboard. Identifying the external object 103 by the processor 220 may include obtaining information (e.g., a coordinate) indicating a position of the external object 103 in an image. For example, the processor 220 may identify the cup, the monitor, and/or the keyboard in the image based on the execution of the object detector 235. The object detector 235 may identify the position of the cup, the position of the monitor, and the position of the keyboard in the image.

According to an embodiment, the processor 220 may store the metadata corresponding to the external objects based on execution of the metadata manager 237. For example, the metadata may include information indicating the segmentation of the external object as well as information that may be obtained from an image, such as a red-green-blue (RGB) image, depth map information, position information, size information, 3D shape information, edge value information, an object identification result, a type of an object, a user-designated name, an object usage number, and/or an area regarding movement of an object. For example, when an external object (a PET bottle covered with a bottle cap) is separated into a first object (e.g., the bottle cap) and a second object (e.g., the PET bottle) in the image obtained through the camera 250, the metadata corresponding to the first object (e.g., the bottle cap) and/or the metadata corresponding to the second object (e.g., the PET bottle) may include information indicating segmentation between the first object (e.g., the bottle cap) and the second object (e.g., the PET bottle). In an embodiment, the metadata may include information indicating a combination of a first external object and a second external object. For example, when the first external object (e.g., the bottle cap) and the second external object (e.g., the PET bottle) are combined in the image obtained through the camera 250, the metadata corresponding to the combined first external object (e.g., the bottle cap) and the second external object (e.g., the PET bottle) may include the information indicating the segmentation between the first external object (e.g., the bottle cap) and the second external object (e.g., the PET bottle).

According to an embodiment, the display 240 may provide a screen indicating a virtual space to the user. For example, the display 240 may output a screen indicating the virtual space, by being controlled by the processor 220 including circuitry such as a graphic processing unit (GPU). For example, the display 240 may include a flat panel display (FPD), and/or electronic paper. For example, the FPD may include a liquid crystal display (LCD), a plasma display panel (PDP), and/or one or more light emitting diodes (LEDs). For example, the LED may include an organic LED (OLED). According to an embodiment, the wearable device 101 may provide the user with a virtual image through the display 240. For example, the virtual image may be an image for indicating a virtual reality (VR), an augmented reality (AR), and/or an extended reality (XR). For example, the virtual image may indicate a media content. According to an embodiment, while the user is wearing the wearable device 101, the wearable device 101 may display the external object 103 together with the virtual space on the display 240. Therefore, according to an embodiment, while the user is wearing the wearable device 101, quality of interaction with the external object 103 may be improved.

According to an embodiment, the sensor 260 may generate electronic information that may be processed by the processor 220 and/or the memory 230 from non-electronic information related to the wearable device 101. The sensor 230 may include a global positioning system (GPS) sensor to detect a geographic location of the wearable device 101, an image sensor, an illumination sensor and/or a time-of-flight (ToF) sensor, and an inertial measurement unit (IMU) to detect a physical motion of the wearable device 101. In an embodiment, the IMU may include at least one of an acceleration sensor, a gyro sensor, or a gravity sensor. The processor 220 may, using the IMU, measure a motion of the wearable device 101 based on 6 degrees of freedom (DoF). The motion of the wearable device 101 based on the 6 degrees of freedom may include movement and rotation (e.g., roll, pitch, and yaw) of the wearable device 101 on three axes (e.g., an x-axis, a y-axis, a z-axis) perpendicular to each other.

According to an embodiment, the wearable device 101 may obtain a depth map for an external space through a depth sensor. According to an embodiment, the wearable device 101 may obtain a depth (or a distance) from the wearable device 101 to the external object through the depth sensor. According to an embodiment, the wearable device 101 may identify a portion on the depth map including the external object through the depth map. The portion on the image including the external object may be referred to as an object area or the first image portion. According to an embodiment, the wearable device 101 may identify the object area through region growing. For example, the wearable device 101 may identify a start area based on an input for designating the external object through the region growing. The wearable device 101 may extend the start area to a first extended area. A difference between a depth corresponding to the first extended area and a depth corresponding to the start area may be less than a reference value. The wearable device 101 may extend the first extended area to a second extended area. A difference between the depth corresponding to the first extended area and a depth corresponding to the second extended area may be less than the reference value. The wearable device 101 may identify an extended area when the extended area is no longer identified as an object area regarding the external object 103. The object area may be an image portion including the external object 103 in the image.

According to an embodiment, the wearable device 101 may additionally include an inertial sensor. The inertial sensor may include the IMU for detecting the physical motion of the wearable device 101. In an embodiment, the IMU may include at least one of the acceleration sensor, the gyro sensor, and the gravity sensor. The wearable device 101 may identify the motion of the wearable device 101, based on the inertial sensor. The wearable device 101 may identify a second image portion in a second image having a position spaced apart from the first image portion corresponding to the external object in a first image, based on the designated motion of the wearable device 101. According to an embodiment, the wearable device 101 may identify the second image portion in the second image having the position spaced apart from the first image portion corresponding to the external object in the first image, based on the position of the wearable device 101 changed to a reference value or more. The second image portion may correspond to an area regarding the movement of the external object. The area regarding the movement of the external object may include an area on an external space where the external object is positioned.

In an embodiment, the communication circuitry 270 may include a hardware component for supporting transmission and/or reception of an electrical signal between the wearable device 101 and an external electronic device (e.g., an external server). For example, the communication circuitry 270 may include at least one of a modem (MODEM), an antenna, and an optic/electronic (O/E) converter. The communication circuitry 270 may support the transmission and/or the reception of the electrical signal based on various types of protocols such as Ethernet, a local area network (LAN), a wide area network (WAN), wireless fidelity (WiFi), Bluetooth, bluetooth low energy (BLE), ZigBee, long term evolution (LTE), 5G new radio (NR), and/or 6G.

According to an embodiment, the wearable device 101 may receive an input for requesting to display the external object 103 on the display 240 through the communication circuitry 270. For example, the wearable device 101 may receive the input from an external electronic device (e.g., a controller and/or a smart ring) through the communication circuitry 270. For example, the wearable device 101 may obtain the input through a click input that occurred in the wearable device. For example, the wearable device 101 may obtain the input based on an identified gesture. For example, the wearable device 101 may designate the external object 103 based on a gaze of the user by tracking the gaze of the user. The wearable device 101 may designate the external object 103, based on time when the gaze stays. However, an embodiment of the present disclosure may not be limited thereto.

In FIG. 2, it has been described that the wearable device 101 identifies the image portion including the external object 103, but an embodiment of the present disclosure may not be limited thereto. The wearable device 101 may receive information on the image portion including the external object 103 from the server through the communication circuitry 270.

In FIG. 2, it has been described that the wearable device 101 stores the metadata in the memory included in the wearable device 101, but an embodiment of the present disclosure may not be limited thereto. The wearable device 101 may receive the metadata from the server through the communication circuitry 270.

In FIG. 2, it has been described that the wearable device 101 identifies the first image portion corresponding to the area regarding the movement of the external object 103, but an embodiment of the present disclosure may not be limited thereto. The wearable device 101 may receive information on the first image portion from the server through the communication circuitry 270.

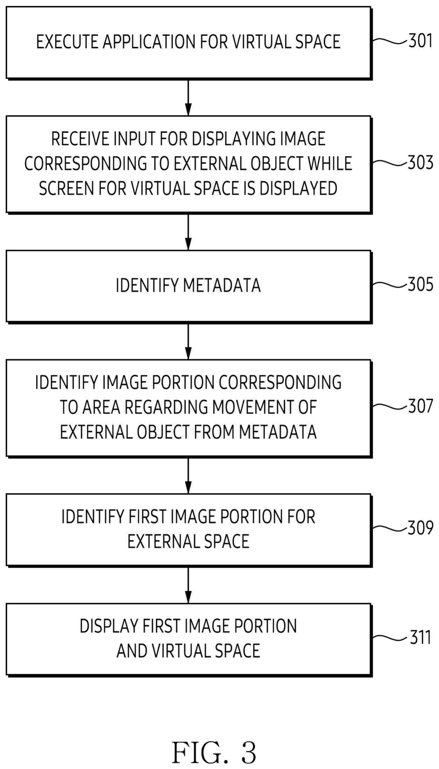

Hereinafter, in FIG. 3, an operation for displaying the virtual space and the image portion including the external object on the display 240 together based on the area regarding the movement of the external object will be described.

FG. 3 illustrates a flow of an operation of an electronic device for display-overlapping an image of an external object on a screen, according to an embodiment. Operations of FIG. 3 may be executed by the wearable device 101 of FIGS. 1 to 2.

Referring to FIG. 3, in an operation 301, at least one processor (e.g., the processor 220 of FIG. 2) of a wearable device (e.g., the wearable device 101 of FIG. 1) may execute an application (e.g., the virtual space output application 231 of FIG. 2) for a virtual space. According to an embodiment, the wearable device 101 may provide a user with a content in the virtual space based on execution of the application 231. For example, the wearable device 101 may provide the user with a content (e.g., a content and/or a movie content for providing a visual reality (VR) game) based on the execution of the application 231. According to an embodiment, the wearable device 101 may provide the user with an interface (e.g., a user interface (UI) in the virtual space for increasing work efficiency) for user convenience based on the execution of the application 231.

In an operation 303, the at least one processor 220 may receive an input for displaying an image corresponding to an external object while a screen for the virtual space is displayed. According to an embodiment, the at least one processor 220 may receive an input for designating that the external object (e.g., a cup) is to be displayed on a display (e.g., the display 240 of FIG. 2) through communication circuitry (e.g., the communication circuitry 270 of FIG. 2). However, an embodiment of the present disclosure may not be limited thereto. The at least one processor 220 may obtain an input for designating that the external object is to be displayed on a display 240. For example, the input may include a touch input and/or a button input for the wearable device 101. According to an embodiment, the user may designate an external object to be designated as a pass through (PT) area through the input. For example, the external object may include a mouse. The PT area may include an image portion including the external object displayed on the display 240 together with the virtual space. The at least one processor 220 may display the PT area on the display 240. The wearable device 101 may display an image portion corresponding to the PT area on the display to overlap the virtual space. For example, the at least one processor 220 may cease displaying a virtual-space portion in the virtual space corresponding to the PT area on the display 240.

In an operation 305, the at least one processor 220 may identify metadata. The metadata may include information on the external object such as a type, color, a position, a range, an RGB image, or depth information of the external object. According to an embodiment, the at least one processor 220 may identify an external object (e.g., the mouse) based on the metadata. The at least one processor 220 may identify the metadata corresponding to the external object (e.g., the mouse). For example, the metadata may include an image portion corresponding to an area regarding the movement of the external object (e.g., the mouse). As an example, the metadata may include an area on an external space where the external object (e.g., the mouse) is positioned for designated time.

In an operation 307, the at least one processor 220 may identify the image portion corresponding to the area regarding the movement of the external object from the metadata. According to an embodiment, the area regarding the movement of the external object may indicate the area on the external space in which the external object is highly likely to move. When a range of the movement of the external object is expected, the area regarding the movement of the external object may be designated to reduce power consumption due to tracking of the external object. For example, the at least one processor 220 may identify the area regarding the movement of the external object, based on the type (or the class) of the external object in which the range of the movement is designated. For example, when the external object is the mouse, an area regarding movement of the mouse may be designated in a fan shape. Since the mouse generates a drag input through movement, the area regarding the movement of the mouse may be designated. For example, when the external object is a fan, an area regarding movement of the fan may be a safety net portion including a wing of the fan. When the fan operates, since the wing of the fan rotates, the area regarding the movement of the fan may be designated.

According to an embodiment, the area regarding the movement of the external object may include an area on the external space where the external object is positioned for a designated time. Based on the type (or the class) of a designated external object corresponding to irregular movement, the at least one processor 220 may identify the area regarding the movement of the external object. For example, an area regarding movement of a cup may include an area on the external space where the cup is positioned for the designated time.

In an operation 309, according to an embodiment, the at least one processor 220 may identify a first image portion for the external space. A first image obtained through a camera (e.g., the camera 250 of FIG. 2) in the wearable device 101 may include an external object. The first image portion may correspond to the area regarding the movement of the external object (e.g., the mouse). The at least one processor 220 may identify the first image portion corresponding to an area regarding the movement of the external object (e.g., the mouse) in the first image for the external space. For example, the at least one processor 220 may identify the first image portion corresponding to the area regarding the movement of the cup within the first image.

In an operation 311, the at least one processor 220 may display the first image portion and the virtual space. According to an embodiment, the at least one processor 220 may display the first image portion on the display 240 together with the virtual space among the first image portion in the first image and a remaining portion in the first image. The first image portion may include a visual object corresponding to the external object. The wearable device 101 may display the first image portion on the display 240 to overlap the virtual space. For example, the at least one processor 220 may cease displaying a virtual-space portion in the virtual space corresponding to the first image portion on the display 240. For example, the at least one processor 220 may display the first image portion corresponding to the area regarding the movement of the external object (e.g., the mouse) in the first image on the display 240 to overlap the virtual space.

According to an embodiment, the at least one processor 220 may display the first image portion on the display 240 so that the first image portion is viewed to the user of the wearable device 101. The at least one processor 220 may change a portion of the virtual space (hereinafter, the virtual-space portion) displayed on the display 240 as the first image portion. For example, by overlapping the first image portion on an image corresponding to the virtual space, the at least one processor 220 may change an object displayed in the corresponding area. For another example, the at least one processor 220 may identify a virtual-space portion corresponding to a position of the first image portion within the virtual space. The at least one processor 220 may cease displaying the virtual space portion while displaying the first image portion through the display 240.

The at least one processor 220 may cease displaying the virtual-space portion within the virtual space corresponding to the first image portion on the display 240. The user wearing the wearable device 101 may visually check the external object (e.g., the mouse) through the first image portion. The user wearing the wearable device 101 may move while visually checking an environment around the mouse through the first image portion.

Hereinafter, referring again to FIG. 1, an operation performed by the wearable device 101 based on operations of FIG. 3 will be described. Referring again to FIG. 1, according to an embodiment, the user may designate at least one external object for work to extend a work environment. The wearable device 101 may display at least one pass through (PT) area regarding the at least one designated external object. The wearable device 101 may display the at least one PT area on the display together with the virtual-space portion within the virtual space. The wearable device 101 may display the at least one PT area on the display to overlap the virtual-space portion within the virtual space. For example, the wearable device 101 may cease displaying the virtual-space portion in the at least one virtual space corresponding to the at least one designated external object on the display. As an example, the wearable device 101 may display an image portion (e.g., the visual object 111) for indicating a monitor on the display together with the virtual-space portion. As an example, the wearable device 101 may display an image portion (e.g., the visual object 117) for indicating a keyboard on the display together with the virtual-space portion. As an example, the wearable device 101 may display an image portion (e.g., the visual object 113) for indicating the cup or an image portion (e.g., the visual object 115) for indicating the movement of the cup on the display together with the virtual space.

According to an embodiment, the user may set an image portion for a snack as a PT area by designating the snack as an external object so that the user may consume the snack while viewing a content. The wearable device 101 may display the external object (e.g., the snack) on the display together with the virtual-space portion. The wearable device 101 may display the virtual space-portions corresponding to image portions for the snack (e.g., popcorn or coke) on the display to overlap the virtual space.

According to an embodiment, by designating a face of colleague as an external object so as to check the face of the colleague in the middle of work, the user may set the image portion for the face of the colleague as the PT area. The wearable device 101 may display the image portion corresponding to the external object (e.g., a portion of the colleague) on the display together with the virtual space.

According to an embodiment, the user may set the image portion for the door as the PT area by designating the door as an external object to check a person entering and leaving a space in which the user is while wearing the wearable device 101. The wearable device 101 may display the image portion corresponding to the door (e.g., a bedroom door, a window, or an entrance) on the display together with the virtual space portion.

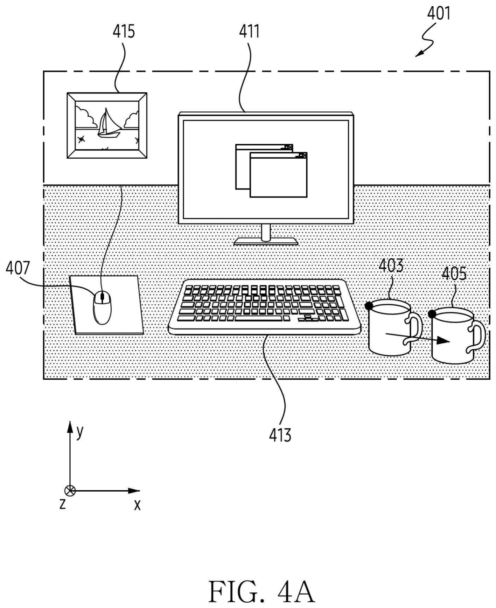

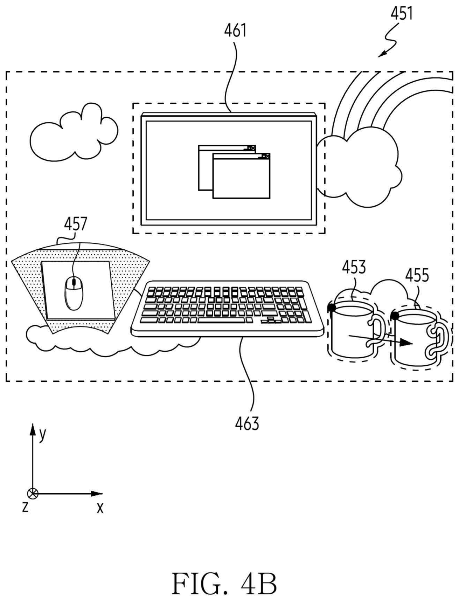

Hereinafter, in FIGS. 4A and 4B, image movement of the external object within the virtual space according to the movement of the external object will be described.

FIG. 4A illustrates an example of movement of an external object in an external image, according to an embodiment.

FIG. 4B illustrates an example of image movement of an external object within a virtual space according to an embodiment. A wearable device 101 described with reference to FIGS. 4A to 4B may include the wearable device 101 of FIGS. 1 to 2. An operation of the wearable device 101 described with reference to FIGS. 4A to 4B may be performed by the wearable device 101 and/or the processor 220 of FIG. 2. Operations of FIG. 3 may be performed by the wearable device 101 described with reference to FIGS. 4A to 4B.

Referring to FIGS. 4A and/or 4B, an image 401 may be obtained through a camera (e.g., the camera 250 of FIG. 2) of a wearable device (e.g., the wearable device 101 of FIG. 1). The image 401 may include a first image portion 411 corresponding to a monitor, a first image portion 403 corresponding to a cup, a second image portion 405 corresponding to the cup, a first image portion 407 corresponding to a mouse, a first image portion 413 corresponding to a keyboard, and a first image portion 415 corresponding to a frame. A screen 451 may include a virtual space, a first virtual-space portion 453 corresponding to the first image portion 403, a second virtual-space portion 455 corresponding to the second image portion 405, and/or a first virtual space-portion 457 corresponding to the first image portion 407, a first virtual-space portion 461 corresponding to the first image portion 411, and/or a first virtual-space portion 463 corresponding to the first image portion 413.

According to an embodiment, the wearable device 101 may execute an application (e.g., the virtual space output application 231 of FIG. 2) for the virtual space. The wearable device 101 may display a portion (e.g., the first image portion 403, the second image portion 405, the first image portion 407, the first image portion 411, the first image portion 413, and the first image portion 415) of an image corresponding to an external object and the virtual space together on the display 240 to provide a user wearing the wearable device 101 with information on a position of the external object. In order to display the external object on the display 240, the wearable device 101 may obtain a first image for an external space through a camera disposed on an opposite surface to a surface on which the display is disposed.

According to an embodiment, the first image may include an external object. For example, the image 401 may include the first image portion 411, the first image portion 403 corresponding to the cup, the second image portion 405 corresponding to the cup, the first image portion 407 corresponding to the mouse, the first image portion 413 corresponding to the keyboard, and the first image portion 415 corresponding to the frame. The user may designate external objects to be designated as a pass through (PT) area through an input. The PT area may be an image portion including an external object displayed on the display together with the virtual space. For example, the user may designate the monitor (the external object corresponding to the first image portion 411), the cup (the external object corresponding to the first image portion 403 and the second image portion 405), the mouse (the external object corresponding to the first image portion 407), and the keyboard (the external object corresponding to the first image portion 413) as the external object corresponding to the PT area. The user may not designate the frame (the external object corresponding to the first image portion 415) as the external object corresponding to the PT area.

According to an embodiment, the wearable device 101 may display the first image portion 403 including a visual object corresponding to the external object (e.g., the cup) together with the virtual space on the display. The first image portion 403 may correspond to the first virtual-space portion 453 on the virtual space. The wearable device 101 may display the first image portion 403 of the image on the display to overlap the virtual space.

According to an embodiment, the user may change the position of the external object corresponding to the first image portion toward a positive x-axis direction. The position of the external object corresponding to the first image portion 403 may be changed to the position of the external object corresponding to the second image portion 405. The wearable device 101 may display the second image portion 405 including the visual object corresponding to the cup together with the virtual space on the display. The second image portion 405 may correspond to the second virtual-space portion 455 on the virtual space. The wearable device 101 may display a second virtual-space portion 455 of the virtual space corresponding to the second image portion 405 of the image on the display.

According to an embodiment, the wearable device 101 may receive an input for requesting to display the external object (e.g., the mouse 413) positioned in the external space around the wearable device on the display while the virtual space is displayed space on the display in the screen 451. The wearable device 101 may identify metadata corresponding to the external object (e.g., the mouse) designated by the input. The metadata may include information on movement of the external object (e.g., the mouse). For example, the information on the movement may include an area where the external object (e.g., the mouse) is positioned for a designated time. The wearable device 101 may, based on identification of the metadata, identify, from the metadata, an area regarding the movement of the external object (e.g., the a mouse). The area regarding the movement may be an area on the external space where the external object is positioned. The wearable device 101 may identify the first image portion (e.g., the first image portion 407) of an image (e.g., the image 401) corresponding to the area regarding the external space obtained through the camera 250. The wearable device 101 may display the first image portion (e.g., the first image portion 407) in the image 401 on the display to overlap the virtual space. The wearable device 101 may cease displaying the virtual space portion (e.g., the portion of the virtual space overlapping the first virtual-space portion 457) corresponding to the first image portion 407 of the image 401 on the display.

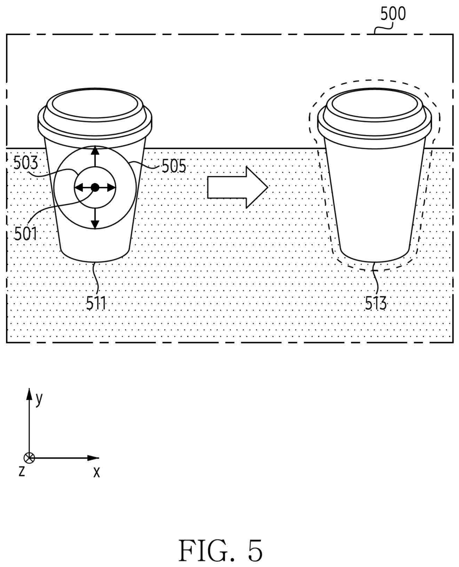

FIG. 5 illustrates an example of an external object identified in an image, according to an embodiment. An operation of a wearable device described with reference to FIG. 5 may be performed by the wearable device 101 described with reference to FIGS. 1, 4A to 4B. The operation of the wearable device described with reference to FIG. 5 may be performed by the wearable device 101 and/or the processor 220 of FIG. 2. The operation of the wearable device described with reference to FIG. 5 may be performed by the wearable device 101 performing the operations of FIG. 3.

Referring to FIG. 5, the wearable device (e.g., the wearable device 101 of FIG. 1) may obtain an image 500 through a camera. The image 500 may include a first image portion 511 or a second image portion 513 having a different position from the first image portion 511. The wearable device 101 may identify a first extended area 503, a second extended area 505 of the image, and the first image portion 511 of the image, based on a start area 501. The wearable device 101 may display the first image portion 511 of the image on a display. The wearable device 101 may display the second image portion 513 on the display instead of the first image portion 511 according to movement of an external object. The first image portion 511 may be different from the second image portion 513. The wearable device 101 may identify the second image portion 513 of the image.

According to an embodiment, the wearable device 101 may identify an object area through region growing. The wearable device 101 may identify the start area 501, based on an input for designating the external object (e.g., a cup) through the region growing. The wearable device 101 may extend the start area 501 to the first extended area 503. A difference between a depth of a portion of the external object corresponding to the first extended area 503 and a depth of a portion of the external object corresponding to the start area 501 may be less than a reference value. The wearable device 101 may generate the second extended area 505 based on the first extended area 503. A difference between the depth of the portion of the external object corresponding to the first extended area 503 and a depth of a portion of the external object corresponding to the second extended area 505 may be less than a reference value. The wearable device 101 may identify an extended area when the extended area is no longer identified as an image portion for the external object (e.g., the cup). For example, the image portion for the external object (e.g., the cup) may be the first image portion 511.

According to an embodiment, a user may change a position of the external object (e.g., the cup) corresponding to the first image portion 511 in a positive x-axis direction. The wearable device 101 may identify the second image portion 513 corresponding to the external object (e.g., the cup) of the changed position. The wearable device 101 may, based on identifying the second image portion 513 having a position spaced apart from the first image portion 511, display the second image portion 513 on the display instead of the first image portion 511 according to a position of the second image portion 513. The wearable device 101 may display the second image portion 513 on the display to overlap the virtual space. For example, the wearable device 101 may cease displaying a virtual space portion within the virtual space corresponding to the position of the second image portion 513. When identifying the movement of the position of the external object in a state in which the first image portion 511 is displayed on the display based on the position of the first image portion 511, the wearable device 101 may cease displaying the first image portion 511 on the display. The wearable device 101 may, based on the position of the external object, display the second image portion 513 on the display.

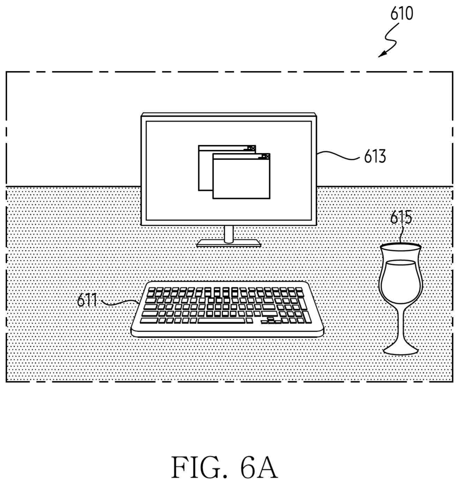

FIG. 6A illustrates an example of a change of an external object in an external image according to an embodiment.

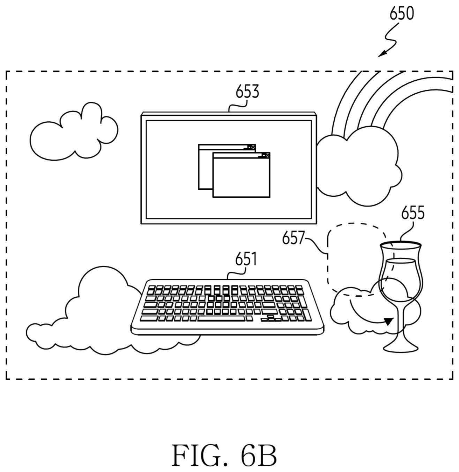

FIG. 6B illustrates an example of an image change of an external object within a virtual space, according to an embodiment. An operation of the wearable device described with reference to FIGS. 6A to 6B may be performed by the wearable device 101 described with reference to FIGS. 1, 4A to 5. An operation of the wearable device described with reference to FIGS. 6A to 6B may be performed by the wearable device 101 and/or the processor 220 of FIG. 2. An operation of the wearable device described with reference to FIGS. 6A to 6B may be performed by the wearable device 101 performing operations of FIG. 3.

Referring to FIGS. 6A and/or 6B, an image 610 may be obtained through a camera (e.g., the camera 250 of FIG. 2) of a wearable device (e.g., the wearable device 101 of FIG. 1). The image 610 may include a first image portion 611 corresponding to a keyboard, a first image portion 613 corresponding to a monitor, and/or a first image portion 615 corresponding to a wine glass. A screen 650 may be displayed on a display of the wearable device 101. The screen 650 may include a virtual space, a first virtual-space portion 655 corresponding to the first image portion 615, a first virtual-space portion 653 corresponding to the first image portion 613, and/or a first virtual-space portion 651 corresponding to the first image portion 611. The wearable device 101 may display the first virtual-space portion 655 corresponding to the wine glass instead of a first virtual-space portion 657 corresponding to the cup on the screen 650.

According to an embodiment, the wearable device 101 may receive an input for requesting to display an external object (e.g., a cup) positioned in an external space around the wearable device 101 on the display while the virtual space is displayed on the display. The wearable device 101 may identify metadata corresponding to the external object (e.g., the cup) designated by the input. The metadata may include information on the external object such as a type, color, a position, or a range of the external object.

According to an embodiment, the wearable device 101 may search for an external object corresponding to the external object (e.g., the cup) in the image 610, based on metadata on the external object (e.g., the cup). When the external object (e.g., the cup) designated by the input in the image 610 is not identify, the wearable device 101 may generate a pass through (PT) area based on another external object (e.g., the wine glass) that partially matches to the information on the external object (e.g., the cup), based on the metadata. For example, the other external object may match at least one of a type (or a class), color, or a position to the external object. The wearable device 101 may identify the other external object (e.g., the wine glass) in the image 610, based on the metadata. Referring to the metadata on the external object (e.g., the cup), the other external object (e.g., the wine glass) may have the same type as the external object (e.g., the cup), but may have different colors, positions, and/or ranges. According to an embodiment, the wearable device 101 may receive an input for requesting to display the external object (e.g., the cup) disposed in the external space around the wearable device 101 on the display while the virtual space is displayed on the display. The wearable device 101 may display the first image portion 615 for the other external object (e.g., the wine glass) as the PT area based on metadata for the external object (e.g., cup). The wearable device 101 may display the first image portion 615 for the other external object (e.g., the wine glass) on the display 240 to overlap the virtual space. The wearable device 101 may cease display of a virtual-space portion, which is a partial area of the virtual space so that the user may view the first image portion 615. For example, the wearable device 101 may identify the virtual-space portion corresponding to a position of the first image portion 615 within the virtual space. On the display 240, other virtual-space portions other than the virtual-space portion may be displayed together with the first image portion 615.

According to an embodiment, the wearable device 101 may, based on metadata for an external object (e.g., the keyboard) designated by an input, search for the external object (e.g., the keyboard) designated by the input in the image 610. When an external object corresponding to the external object (e.g., the keyboard) designated by the input in the image 610 is not identify, the wearable device 101 may generate a pass through (PT) area based on another external object (e.g., the wine glass) that partially matches to the information on the external object, based on the metadata. For example, the wearable device 101 may identify the other external object (e.g., an external object corresponding to a plate tablet) in the image 610, based on the metadata. Referring to the metadata on the external object (e.g., the keyboard) designated by the input, the other external object (e.g., the plate tablet) may has the same position as the external object (e.g., keyboard) designated by the input, but may have different types, colors, and/or ranges. According to an embodiment, the wearable device 101 may receive an input for requesting to display the keyboard positioned in the external space around the wearable device 101 on the display while the virtual space is displayed on the display. The wearable device 101 may display a first image portion for the other external object (e.g., the plate tablet) as the PT area based on the metadata for the external object (e.g., the keyboard) designated by the input. The wearable device 101 may display the first image portion for the other external object (e.g., the plate tablet) on the display 240 to overlap the virtual space. The wearable device 101 may cease displaying a virtual-space portion corresponding to the first image portion for the other external object (e.g., a plate tablet).

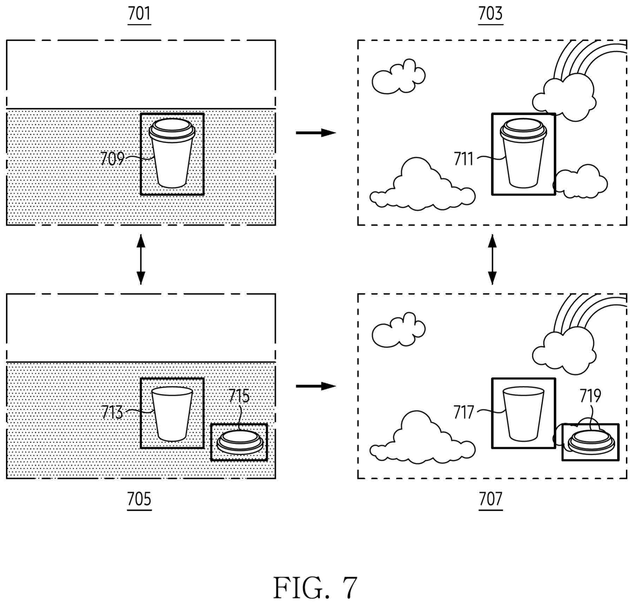

FIG. 7 illustrates an example of a segmentation of an external object, according to an embodiment. An operation of a wearable device described with reference to FIG. 7 may be performed by the wearable device 101 described with reference to FIGS. 1, 4A to 6B. An operation of the wearable device described with reference to FIG. 7 may be performed by the wearable device 101 performing an operation of FIG. 3. The operation of the wearable device described with reference to FIG. 7 may be performed by the wearable device 101 and/or the processor 220 of FIG. 2.

Referring to FIG. 7, the wearable device (e.g., the wearable device 101 of FIG. 1) may obtain an image 701 and an image 705 including an external object through a camera. The wearable device 101 may display a screen 703 or a screen 707 including the external object on a display (e.g., the display 240 of FIG. 2). In the image 701, the wearable device 101 may identify an external object (e.g., a cup set). The wearable device 101 may display a fifth image portion 709 on the display 240 in which a first image portion 713 corresponding to a cup and a fourth image portion 715 corresponding to a cup lid are combined. On the screen 703, the wearable device 101 may display a fifth virtual-space portion 711 corresponding to the fifth image portion 709 including the external object (e.g., the cup set) on the display 240. On the screen 707, the wearable device 101 may display a first virtual-space portion 717 corresponding to the first image portion 713 and a fourth virtual-space portion 719 corresponding to the first image portion 715 on the display 240.

According to an embodiment, the image 701 may include the fifth image portion 709 in which the first image portion 713 and the fourth image portion 715 are combined. The image 705 may include the first image portion 713 and the fourth image portion 715. The wearable device 101 may store information indicating a segmentation of the image portion (e.g., the first image portion 709) corresponding to the external object with respect to metadata on the first image portion (e.g., the first image portion 713) and metadata on the fourth image portion (e.g., fourth image portion 715) in memory (e.g., the memory 230 of FIG. 2). For example, the wearable device 101 may store information indicating the segmentation of the external object (e.g., the first image portion 709) in the memory, based on identifying a distance between the first image portion 713 and the fourth image portion 715 greater than or equal to a reference value.

According to an embodiment, the image 705 may include the first image portion 713 and the fourth image portion 715. The image 701 may include the fifth image portion 709 in which the first image portion and the fourth image portion are combined. The wearable device 101 may store information indicating a combination of the first external object and the second external object in the memory 230 with respect to metadata on the image portion (e.g., the first image portion 713) corresponding to the first external object (e.g., the cup) and metadata on the image portion (e.g., the first image portion 715) corresponding to the second external object (e.g., the cup lid). For example, the wearable device 101 may store information indicating the combination of the first external object (e.g., the cup) and the second external object (e.g., the cup lid) in the memory 230 based on identifying the distance between the first image portion and the fourth image portion less than a reference value.

According to an embodiment, on the screen 703, the wearable device 101 may display the fifth virtual-space portion 711 that is a portion on a virtual space corresponding to the fifth image portion 709 in the image 701 through the display 240. A position of the fifth virtual-space portion 711 on the screen 703 may correspond to a position of the fifth image portion 709 on the image 701.

According to an embodiment, on the screen 707, the first virtual-space portion 717 and the fourth virtual-space portion 719 that are a portion in the virtual space corresponding to the first image portion 713 and the fourth image portion 715 in the image 705 may be displayed. A position of the first virtual-space portion 717 on the screen 707 may correspond to a position of the first image portion 713 on the image 705. A position of the fourth virtual space portion 719 on the screen 707 may correspond to a position of the fourth image portion 715 on the image 705.

According to an embodiment, the wearable device 101 may obtain the image 701 from a camera. In response to identifying at least one of the first external object (e.g., the cup) or the second external object (e.g., the cup lid) in the image 701, the fifth virtual space portion 711 including a visual object indicated by the combined information stored in the metadata and corresponding to the external object (e.g., a cup set) may be displayed on the display 240.

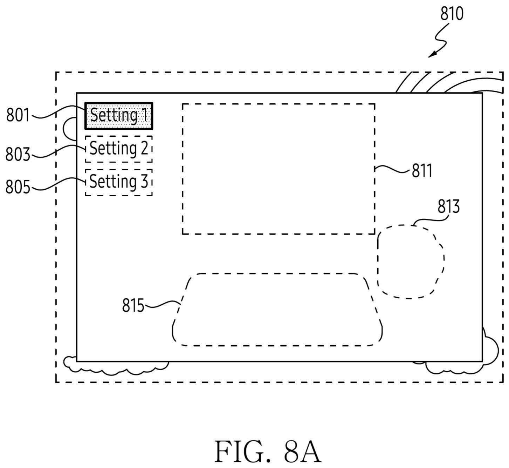

FIG. 8A illustrates an example of a setting for images for a plurality of external objects, according to an embodiment.

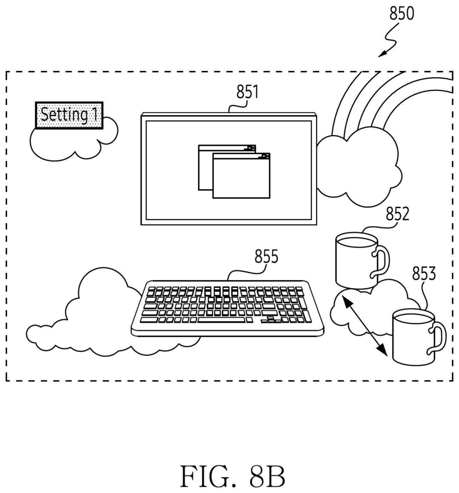

FIG. 8B illustrates an example of a virtual space according to a setting for images for a plurality of external objects, according to an embodiment. An operation of a wearable device described with reference to FIGS. 8A to 8B may be performed by the wearable device 101 described with reference to FIGS. 1, 4A to 7. An operation of the wearable device 101 described with reference to FIGS. 8A to 8B may be performed by the wearable device 101 and/or the processor 220 of FIG. 2. The operation of the wearable device 101 described with reference to FIGS. 8A to 8B may be performed by the wearable device 101 performing the operations of FIG. 3.

Referring to FIGS. 8A and/or 8B, on the screen 810, the wearable device (e.g., the wearable device 101 of FIG. 1) may set a class, a position, and/or colors of an external object together for designating a plurality of pass through areas. The plurality of PT areas may be an image portion including the external object displayed on the display together with a virtual space. The wearable device 101 may display the image portion corresponding to the plurality of PT areas on the display. The wearable device 101 may display the image portion corresponding to the plurality of PT areas on the display to overlap the virtual space. For example, the wearable device 101 may cease displaying the virtual-space portion corresponding to a position of the PT area on the display. For example, on the screen 810, the plurality of PT areas may include a PT area 811, a PT area 813, and/or a PT area 815. In an embodiment, a combination of the plurality of PT areas may be set by a user. For example, the user may set the combination of the PT areas according to usage context (e.g., creating a work environment or viewing a content) through a button 801, a button 803, and/or a button 805. For example, the user may set a first combination (e.g., a combination set upon user input to the button 801) of the PT areas for the work environment through the wearable device 101. On the screen 850, the wearable device 101 may include a first virtual-space portion 851 corresponding to the PT area 811 related to a monitor, a first virtual-space portion 855 corresponding to a PT area 815 related to the keyboard, a first virtual-space portion 852 corresponding to the PT area 813 related to a cup, and a first virtual-space portion 853 corresponding to the PT area 813 related to the cup. For example, the user may set a second combination content (e.g., a combination set when the user inputs to the button 803) of the PT areas for viewing the through wearable device 101. The wearable device 101 may display a screen including a first virtual space portion corresponding to the PT area related to the monitor, a first virtual space portion corresponding to a PT area related to a speaker, and a first virtual space portion corresponding to a PT area related to popcorn on the display.

According to embodiments, the wearable device 101 may set the combination of the plurality of PT areas according to the usage context. User convenience may be improved by setting the combination of the plurality of PT areas.

According to an embodiment, according to the combination of the plurality of PT areas set on the screen 810, an image portion corresponding to an external object may be displayed to overlap on the virtual space on the screen 850. For example, on the screen 850, the wearable device 101 may display the virtual-space portions corresponding to the combination (e.g., the PT area 811, the PT area 813, and the PT area 815) of the plurality of PT areas on the display. According to PT area 811 setting, the wearable device 101 may display the first virtual-space portion 851 corresponding to a class (e.g., the monitor) of a designated external object. According to PT area 813 setting, the wearable device 101 may display the first virtual-space portion 852 and 853 corresponding to a class (e.g., the cup) of a designated external object. According to PT area 815 setting, the wearable device 101 may display the first virtual-space portion 855 corresponding to a class (e.g., the keyboard) of a designated external object.

According to an embodiment, the first virtual-space portion 852 on the screen 850 may be changed into the first virtual space portion 853 according to a change in a position of the external object (e.g., the cup) for the PT area 813, which is a part of the combination (e.g., the PT area 811, the PT area 813, and the PT area 815) of the plurality of PT areas. The first virtual-space portion 852 and/or the first virtual space portion 853 may correspond to the PT area 813. Even if the virtual-space portion corresponding to the PT area 813 is changed from the first virtual-space portion 852 to the first virtual-space portion 853, the virtual-space portion 851 corresponding to the PT area 811 and the virtual-space portion 855 corresponding to the PT area 815 may be maintained.

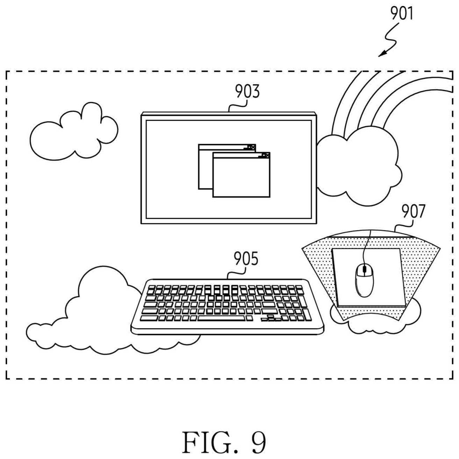

FIG. 9 illustrates an example of a virtual space according to a position range of an external object, according to an embodiment. An operation of a wearable device described with reference to FIG. 9 may be performed by the wearable device 101 described with reference to FIGS. 1, 4A to 8B. The operation of the wearable device described with reference to FIG. 9 may be performed by the wearable device 101 and/or the processor 220 of FIG. 2. The operation of the wearable device described with reference to FIG. 9 may be performed by the wearable device 101 performing the operations of FIG. 3.

Referring to FIG. 9, on a screen 901, the wearable device (e.g., the wearable device 101 of FIG. 1) may include a first virtual-space portion 903 corresponding to a first image portion related to a monitor, a first virtual-space portion 905 corresponding to the first image portion related to the keyboard, and/or a first virtual-space portion 907 corresponding to the first image portion related to the mouse.

According to an embodiment, the wearable device 101 may receive an input for requesting to display an external object (e.g., the monitor, the keyboard, or the mouse) position in an external space around the wearable device 101 on the display while the virtual space is displayed on a display (e.g., the display 240 of FIG. 2). The wearable device 101 may identify metadata corresponding to the external object (e.g., the monitor, the keyboard, or the mouse) designated by an input. The wearable device 101 may, based on identification of the metadata, identify, from the metadata, an area regarding movement of the external object. According to an embodiment, the area regarding the movement may include an area on the external space where the external object (e.g., the monitor, the keyboard, or the mouse) is positioned for a designated time. For example, an area regarding movement corresponding to the monitor may correspond to the first virtual-space portion 903. An area regarding movement corresponding to the keyboard may correspond to the first virtual-space portion 905. An area regarding movement corresponding to the mouse may correspond to the first virtual-space portion 907. According to an embodiment, an area regarding the movement may be designated according to a class of the external object. The area regarding the movement of the external object may indicate an area on the external space in which the external object is highly likely to move. When a range of the movement of the external object is expected, an area the movement of the external object may be designated to reduce power consumption due to tracking of the external object. For example, based on a type (or the class) of the external object in which the range of the movement is designated, the wearable device 101 may identify an area regarding the movement of the external object. For example, when the external object is a mouse, an area regarding movement of the mouse may be designated in a fan shape. For example, based on the type (or the class) of the designated external object corresponding to irregular movement, the wearable device 101 may identify the area regarding the movement of the external object.

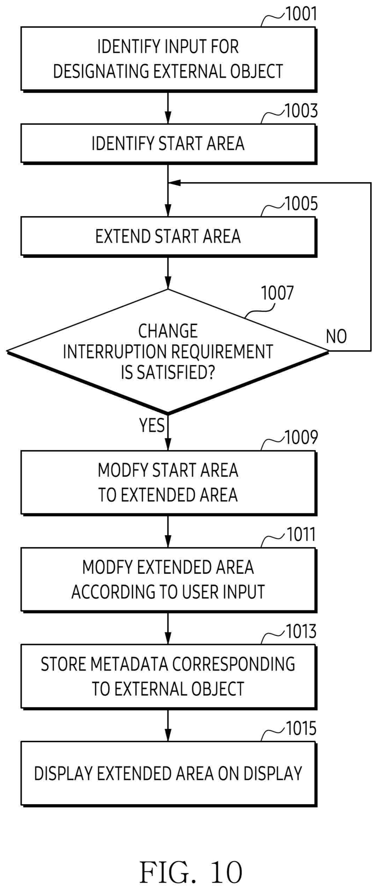

FIG. 10 illustrates a flow of an operation of an electronic device for indicating a segmentation of an external object in a virtual space, according to an embodiment. An operation of the wearable device performing an operation of FIG. 10 may be performed by the wearable device 101 of FIGS. 1 to 2. The operation of the wearable device 101 performing the operation of FIG. 10 may be performed by the wearable device 101 and/or the processor 220 of FIG. 2. The operation of the wearable device 101 performing the operation of FIG. 10 may be performed by the wearable device 101 performing the operations of FIG. 3. The operation of the wearable device 101 performing the operation of FIG. 10 may be performed by the wearable device 101 performing the operation of FIGS. 4A to 9.

Referring to FIG. 10, in an operation 1001, the wearable device (e.g., the wearable device 101 of FIG. 1) may identify an input for designating an external object. According to an embodiment, a user may designate an external object for identifying a pass through (PT) area. For example, the wearable device 101 may obtain an input for designating a monitor as an PT area. For example, the user may generate an input by an external auxiliary device such as a smart ring or a controller. For example, the wearable device 101 may obtain the input through a click input that has occurred in the wearable device. For example, the wearable device 101 may obtain the input based on an identified gesture. For example, the wearable device 101 may designate the external object based on a gaze of the user by tracking a gaze of the user. The wearable device 101 may designate the external object based on time the gaze stays. A portion including the external object may be referred to as an object area or a first image portion. According to an embodiment, the wearable device 101 may identify the object area based on a start area through region growing. Hereinafter, a description of the object area may be described from an operation 1003 to an operation 1011.

In the operation 1003, the wearable device 101 may identify the start area. According to an embodiment, the start area may be an area indicated by the input. According to an embodiment, the start area may be a point corresponding to the external object. For example, it may be a central portion of the external object. For example, it may be a portion of a designated position of the external object.

In an operation 1005, the wearable device 101 may extend the start area. The wearable device 101 may extend the start area to a first extended area. A difference between a depth corresponding to the first extended area and a depth corresponding to the start area may be less than a reference value. The wearable device 101 may extend the first extended area to a second extended area. A difference between a depth of a portion corresponding to a boundary line of the first extended area and a depth corresponding to the second extended area may be less than the reference value. The second extended area may include the first extended area. The first extended area may include the start area. In the operation 1005, although the area is described as being extended only to the second extended area, the second extended area may be continuously extended until a change interruption requirement is satisfied. According to an embodiment, in order to increase precision of the extended area, the wearable device 101 may perform area extended based on an image analysis result such as an RGB image, an object identification result, or edge value information. For example, when two or more objects overlap on an image, a boundary between the two or more objects may be identified based on the edge value information. For example, when two or more objects overlap on the image, an extended area may be identified with respect to an object containing the starting point.

In an operation 1007, the wearable device 101 may identify whether the change interruption requirement is satisfied. When the change interruption requirement is satisfied, the wearable device 101 may perform an operation 1009. When the change interruption requirement is not satisfied, the wearable device 101 may perform the operation 1005. According to an embodiment, the change interruption requirement may not additionally extend the extended area or may be whether the extended area corresponds to a maximum area size. The maximum area size may be a value designated as the maximum value of an extent of an area regarding the external object. The maximum area size may be changed by the user.

In an operation 1009, the wearable device 101 may modify the start area to the extended area. According to an embodiment, when the change interruption requirement is satisfied, the wearable device 101 may modify the extended area to an area regarding the external object. The wearable device 101 may identify the extended area as the area regarding the external object. According to an embodiment, the area regarding the external object may overlap a boundary of an object and have a shape on a three dimension. Accordingly, even if a viewpoint of the user is changed, the area regarding the external object may be identified identically.

In the operation 1011, the wearable device 101 may modify the extended area according to a user input. For user convenience, the wearable device 101 may modify the area regarding the external object through the user input.

In an operation 1013, the wearable device 101 may store metadata corresponding to the external object. The metadata may include information that may be obtained from an image, such as an object identification result, a type of an object, a user-designated name, the number of object uses, or an area regarding movement of an object as well as a red-green-blue (RGB) image, depth map information, position information, size information, three-dimensional shape information, and/or edge value information of the external object.

In an operation 1015, the wearable device 101 may display the extended area on the display. The wearable device 101 may obtain information on the object from an image or database obtained from a camera. The wearable device 101 may store the metadata together with the area regarding the object.

According to an embodiment, the user may use an area call function for an object. For example, when the user uses the area call function, the wearable device 101 may identify the area regarding the object based on the stored area regarding the object. For example, when an external object (e.g., a cup) corresponding to the stored area is not identified, the wearable device 101 may identify an external object (e.g., a wine glass) corresponding to the area based on a part of information included in the stored metadata of the area.

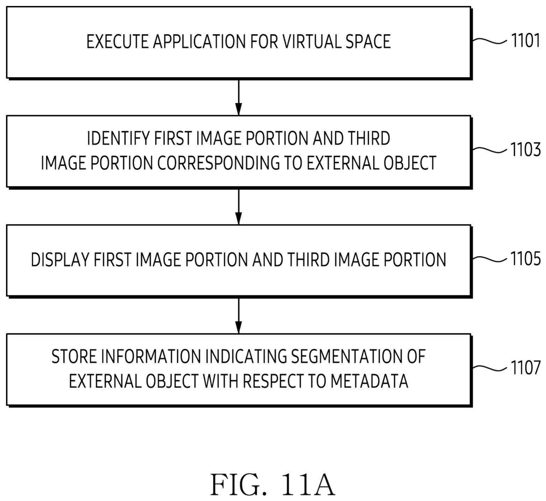

FIG. 11A illustrates a flow of an operation of an electronic device for indicating a segmentation of an external object in a virtual space, according to an embodiment. A wearable device performing operations of FIG. 11A may be performed by the wearable device 101 described with reference to FIGS. 1, 4A to 9. The operations of FIG. 11A may be performed by the wearable device 101 and/or the processor 220 of FIG. 2. The wearable device performing the operations of FIG. 11A may perform the operations of FIGS. 3 and/or 10.

Referring to FIG. 11A, in an operation 1101, the wearable device (e.g., the wearable device 101 of FIG. 1) may execute an application (e.g., the virtual space output application 231 of FIG. 2) for a virtual space. The wearable device 101 may provide a user with a content (e.g., a visual reality (VR) game or a movie content) in the virtual space through the application 231. According to an embodiment, the wearable device 101 may provide a user with an interface (e.g., a user interface (UI) in a virtual space to increase work efficiency) for user convenience through the application 231. While the user wears the wearable device 101, the wearable device 101 may include a display disposed on a first surface of the housing facing the eye. According to an embodiment, the wearable device 101 may provide the user with a virtual reality (VR), by displaying a screen for a virtual space in the display disposed on the first surface. The wearable device 101 may obtain an image for an external object through a camera.

In an operation 1103, the wearable device 101 may identify a first image portion and a third image portion for movement of the external object. The wearable device 101 may identify the external object included in the image. According to an embodiment, the wearable device 101 may identify that the external object (e.g., a wireless phone being charged) recognized as an object is separated into two or more objects (e.g., a charger and the wireless phone) through the camera (e.g., the camera 250 of FIG. 2). The two or more objects may include the first image portion (e.g., the image portion including the charger) and the third image portion (e.g., the image portion including the wireless phone). The first image portion may be spaced apart from the third image portion.

In an operation 1105, the wearable device 101 may display the first image portion and the third image portion. According to an embodiment, the wearable device 101 may display the first image portion (e.g., the image portion including the charger) on the display. The wearable device 101 may display the first image portion (e.g., the image portion including the charger) on the display to overlap the virtual space. The wearable device 101 may cease displaying the virtual-space portion overlapping the first image portion (e.g., the image portion including the charger). According to an embodiment, the wearable device 101 may display the third image portion (e.g., the image portion including the wireless phone) on the display. The wearable device 101 may display the third image portion (e.g., the image portion including the wireless phone) on the display to overlap the virtual space. The wearable device 101 may cease displaying the virtual space portion overlapped the third image portion (e.g., the image portion including the wireless phone). That is, the wearable device 101 may generate a pass through area with respect to the first image portion (e.g., the image portion including the charger) and the third image portion (e.g., the image portion including the wireless phone).

In an operation 1107, the wearable device 101 may store information indicating the a segmentation of an external object with respect to metadata. According to an embodiment, the wearable device 101 may store, in the memory, information indicating the segmentation of the external object (e.g., the wireless phone being charged) with respect to metadata for the first image portion (e.g., the image portion including the charger) and/or metadata for the third image portion (e.g., the image portion including the wireless phone).

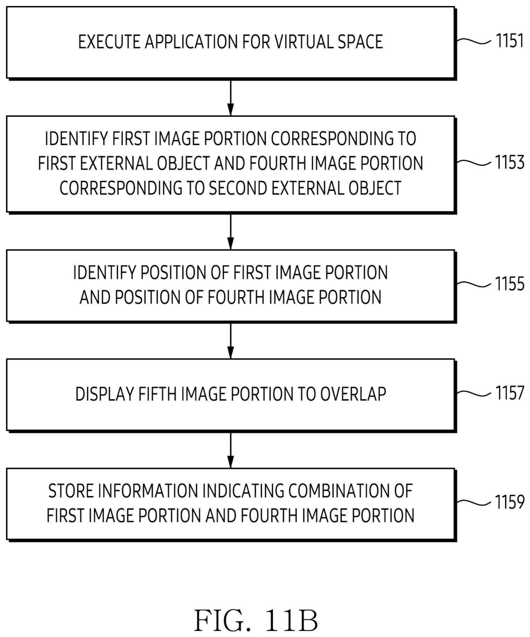

FIG. 11B illustrates a flow of an operation of an electronic device for indicating a combination of an external object in a virtual space, according to an embodiment. A wearable device performing operations of FIG. 11B may be performed by the wearable device 101 described with reference to FIGS. 1, 4A to 9. The operations of FIG. 11B may be performed by the wearable device 101 and/or the processor 220 of FIG. 2. The wearable device performing the operations of FIG. 11B may perform the operations of FIGS. 3, 10, and 11A.

Referring to FIG. 11B, in an operation 1151, the wearable device (e.g., the wearable device 101 of FIG. 1) may execute an application (e.g., the virtual space output application 231 of FIG. 2) for the virtual space. The wearable device 101 may provide the user with the content (e.g., the visual reality (VR) game content or the movie content) in the virtual space through the application 231. For example, the wearable device 101 may provide the user with an interface (e.g., a user interface (UI) in the virtual space to increase work efficiency) for user convenience through the application 231. While the user wears the wearable device 101, the wearable device 101 may include the display disposed on the first surface of the housing facing the eye. According to an embodiment, the wearable device 101 may provide the user with the virtual reality (VR), by displaying a screen for the virtual space in the display disposed on the first surface. The wearable device 101 may obtain the image for the external object through the camera.

In operation 1153, the wearable device 101 may identify the first image portion corresponding to a first external object and a fourth image portion corresponding to an area regarding movement of a second external object. The wearable device 101 may identify the first external object and the second external object included in the image.

In an operation 1155, the wearable device 101 may identify a position of the first image portion and a position of the fourth image portion. According to an embodiment, the wearable device 101 may identify a distance between a position of the first external object and a position of the second external object. The wearable device 101 may identify that the first external object and the second external object are combined based on the distance between the position of the first external object and the position of the second external object. For example, when the first external object (e.g., the charger) and the second external object (e.g., the wireless phone) are combined, the combined external object (e.g., the wireless phone set) may be identified. According to an embodiment, the wearable device 101 may identify the combination of the external object based on a distance between the first image portion corresponding to the first external object (e.g., the charger) less than a reference value and the fourth image portion corresponding to the area regarding the movement of the second external object (e.g., a wireless phone).

In an operation 1157, the wearable device 101 may display a fifth image portion to overlap the virtual space. The fifth image portion may be a portion in which the first image portion and the fourth image portion overlap. For example, the fifth image portion may include the first image portion and the fourth image portion. The fifth image portion may include the first image portion, the fourth image portion, and the first image portion and the fourth image portion. For example, the fifth image portion may correspond to a combined external object (e.g., the wireless phone set).

In an operation 1159, the wearable device 101 may store information indicating the combination of the first image portion and the fourth image portion. According to an embodiment, the wearable device 101 may store the information indicating the combination of the first external object and the second external object with respect to metadata corresponding to the first external object (e.g., the charger) and the second external object (e.g., the wireless phone). For example, the wearable device 101 may store the information indicating the combination of the first external object (e.g., the charger) and the second external object (e.g., the wireless phone) in the metadata on the combined external object (e.g., the wireless phone set).

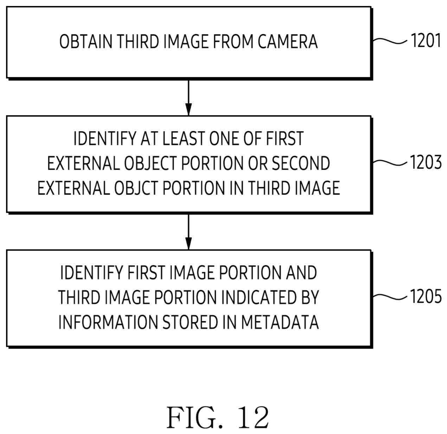

FIG. 12 illustrates a flow of an operation of an electronic device for fetching an image corresponding to an external object based on identifying a part of the external object, according to an embodiment. A wearable device 101 performing operations of FIG. 12 may include the wearable device 101 of FIGS. 1 to 2. The operations of FIG. 12 may be performed by the wearable device 101 and/or the processor 220 of FIG. 2. The wearable device 101 performing the operations of FIG. 12 may perform the operations of FIG. 3. The operations of FIG. 12 may be performed by the wearable device 101 performing the operation of FIGS. 4A to 9. The operations of FIG. 12 may be performed by the wearable device 101 performing the operation of FIGS. 10 to 11B.

Referring to FIG. 12, in an operation 1201, the wearable device (e.g., the wearable device 101 of FIG. 1) may obtain a third image from a camera. The third image may include a first image portion and a fourth image portion corresponding to an area with respect to movement of an external object. The first image portion may correspond to a first external object portion, and the fourth image portion may correspond to a second external object portion. The operations of FIG. 12 may be executed by the wearable device 101 of FIGS. 1 to 2.

In an operation 1203, the wearable device 101 may identify at least one of the first external object portion or the second external object portion in a third image. The first external object portion and the second external object portion may be included in the external object. For example, in the third image including the wireless phone, the wearable device 101 may identify at least one of a charger portion and a wireless phone portion.

In an operation 1205, the wearable device 101 may identify the first image portion and a third image portion indicated by information stored in metadata. For example, the wearable device 101 may identify the first image portion corresponding to the first external object portion and the third image portion for movement of the second external object in the third image. When the first image portion and/or the third image portion is identified, the wearable device 101 may display the first image portion and/or the third portion on the display together with a virtual space.

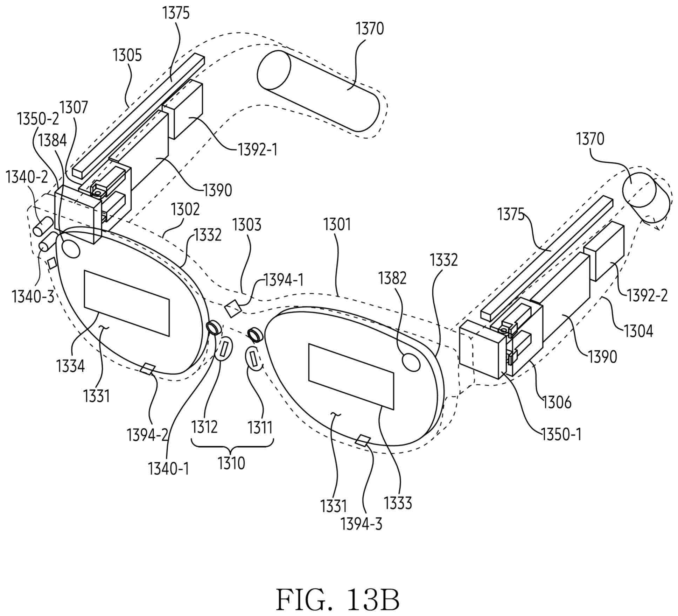

FIG. 13A illustrates an example of a perspective view of a wearable device, according to an embodiment. FIG. 13B illustrates an example of one or more hardware disposed in a wearable device, according to an embodiment. A wearable device 101 of FIGS. 1 to 2 may include a wearable device 1300 of FIGS. 13A to 13B. The wearable device 101 performing the operations of FIG. 3 may include the wearable device 1300 of FIGS. 13A to 13B. The wearable device 101 performing the operation of FIGS. 4A to 9 may include the wearable device 1300 of FIGS. 13A to 13B. The wearable device 101 performing the operation of FIGS. 10 to 12 may include the wearable device 1300 of FIGS. 13A to 13B. As shown in FIG. 13A, according to an embodiment, the wearable device 1300 may include at least one display 1350 and a frame supporting the at least one display 1350.

According to an embodiment, the wearable device 1300 may be wearable on a portion of the user's body. The wearable device 1300 may provide augmented reality (AR), virtual reality (VR), or mixed reality (MR) combining the augmented reality and the virtual reality to a user wearing the wearable device 1300. For example, the wearable device 1300 may output a virtual reality image through at least one display 1350, in response to a user's preset gesture obtained through a motion recognition camera 1340-2 of FIG. 13B.

According to an embodiment, the at least one display 1350 within the electronic device 1300 may provide visual information to a user. The at least one display 1350 may include the display 240 of FIG. 2. For example, the at least one display 1350 may include a transparent or translucent lens. The at least one display 1350 may include a first display 1350-1 and/or a second display 1350-2 spaced apart from the first display 1350-1. For example, the first display 1350-1 and the second display 1350-2 may be disposed at positions corresponding to the user's left and right eyes, respectively.

Referring to FIG. 13B, the at least one display 1350 may form a display area on the lens to provide a user wearing the wearable device 1300 with visual information included in ambient light passing through the lens and other visual information distinct from the visual information. The lens may be formed based on at least one of a fresnel lens, a pancake lens, or a multi-channel lens. The display area formed by the at least one display 1350 may be formed on the second surface 1332 of the first surface 1331 and the second surface 1332 of the lens. When the user wears the wearable device 1300, ambient light may be transmitted to the user by being incident on the first surface 1331 and being penetrated through the second surface 1332. For another example, the at least one display 1350 may display a virtual reality image to be coupled with a reality screen transmitted through ambient light. The virtual reality image outputted from the at least one display 1350 may be transmitted to eyes of the user, through one or more hardware (e.g., optical devices 1382 and 1384, and/or at least one waveguides 1333 and 1334) included in the wearable device 1300.

According to an embodiment, the wearable device 1300 may include waveguides 1333 and 1334 that transmit light transmitted from the at least one display 1350 and relayed by the at least one optical device 1382 and 1384 by diffracting to the user. The waveguides 1333 and 1334 may be formed based on at least one of glass, plastic, or polymer. A nano pattern may be formed on at least a portion of the outside or inside of the waveguides 1333 and 1334. The nano pattern may be formed based on a grating structure having a polygonal or curved shape. Light incident to an end of the waveguides 1333 and 1334 may be propagated to another end of the waveguides 1333 and 1334 by the nano pattern. The waveguides 1333 and 1334 may include at least one of at least one diffraction element (e.g., a diffractive optical element (DOE), a holographic optical element (HOE)), and a reflection element (e.g., a reflection mirror). For example, the waveguides 1333 and 1334 may be disposed in the wearable device 1300 to guide a screen displayed by the at least one display 1350 to the user's eyes. For example, the screen may be transmitted to the user's eyes through total internal reflection (TIR) generated in the waveguides 1333 and 1334.

According to an embodiment, the wearable device 1300 may analyze an object included in a real image collected through a photographing camera 1340-1, combine with a virtual object corresponding to an object that become a subject of augmented reality provision among the analyzed object, and display on the at least one display 1350. The virtual object may include at least one of text and images for various information associated with the object included in the real image. The wearable device 1300 may analyze the object based on a multi-camera such as a stereo camera. For the object analysis, the wearable device 1300 may execute time-of-flight (ToF) and/or simultaneous localization and mapping (SLAM) supported by the multi-camera. The user wearing the wearable device 1300 may watch an image displayed on the at least one display 1350.

According to an embodiment, a frame may be configured with a physical structure in which the wearable device 1300 may be worn on the user's body. According to an embodiment, the frame may be configured so that when the user wears the wearable device 1300, the first display 1350-1 and the second display 1350-2 may be positioned corresponding to the user's left and right eyes. The frame may support the at least one display 1350. For example, the frame may support the first display 1350-1 and the second display 1350-2 to be positioned at positions corresponding to the user's left and right eyes.

Referring to FIG. 13A, according to an embodiment, the frame may include an area 1320 at least partially in contact with the portion of the user's body in case that the user wears the wearable device 1300. For example, the area 1320 of the frame in contact with the portion of the user's body may include an area in contact with a portion of the user's nose, a portion of the user's ear, and a portion of the side of the user's face that the wearable device 1300 contacts. According to an embodiment, the frame may include a nose pad 1310 that is contacted on the portion of the user's body. When the wearable device 1300 is worn by the user, the nose pad 1310 may be contacted on the portion of the user's nose. The frame may include a first temple 1304 and a second temple 1305, which are contacted on another portion of the user's body that is distinct from the portion of the user's body.

According to an embodiment, the frame may include a first rim 1301 surrounding at least a portion of the first display 1350-1, a second rim 1302 surrounding at least a portion of the second display 1350-2, a bridge 1303 disposed between the first rim 1301 and the second rim 1302, a first pad 1311 disposed along a portion of the edge of the first rim 1301 from one end of the bridge 1303, a second pad 1312 disposed along a portion of the edge of the second rim 1302 from the other end of the bridge 1303, the first temple 1304 extending from the first rim 1301 and fixed to a portion of the wearer's ear, and the second temple 1305 extending from the second rim 1302 and fixed to a portion of the ear opposite to the ear. The first pad 1311 and the second pad 1312 may be in contact with the portion of the user's nose, and the first temple 1304 and the second temple 1305 may be in contact with a portion of the user's face and the portion of the user's ear. The temples 1304 and 1305 may be rotatably connected to the rim through hinge units 1306 and 1307 of FIG. 13B. The first temple 1304 may be rotatably connected with respect to the first rim 1301 through the first hinge unit 1306 disposed between the first rim 1301 and the first temple 1304. The second temple 1305 may be rotatably connected with respect to the second rim 1302 through the second hinge unit 1307 disposed between the second rim 1302 and the second temple 1305. According to an embodiment, the wearable device 1300 may identify an external object (e.g., a user's fingertip) touching the frame and/or a gesture performed by the external object by using a touch sensor, a grip sensor, and/or a proximity sensor formed on at least a portion of the surface of the frame.

According to an embodiment, the wearable device 1300 may include hardware (e.g., hardware described above based on the block diagram of FIG. 2) that performs various functions. For example, the hardware may include a battery module 1370, an antenna module 1375, optical devices 1382 and 1384, speakers 1392-1 and 1392-2, microphones 1394-1, 1394-2, and 1394-3, a depth sensor module (not illustrated), and/or a printed circuit board (PCB) 1390. Various hardware may be disposed in the frame.

According to an embodiment, the microphones 1394-1, 1394-2, and 1394-3 of the wearable device 1300 may obtain a sound signal, by being disposed on at least a portion of the frame. The first microphone 1394-1 disposed on the nose pad 1310, the second microphone 1394-2 disposed on the second rim 1302, and the third microphone 1394-3 disposed on the first rim 1301 are illustrated in FIG. 13B, but the number and disposition of the microphone 1394 are not limited to an embodiment of FIG. 13B. In a case that the number of the microphone 1394 included in the wearable device 1300 is two or more, the wearable device 1300 may identify a direction of the sound signal by using a plurality of microphones disposed on different portions of the frame.

According to an embodiment, the optical devices 1382 and 1384 may transmit a virtual object transmitted from the at least one display 1350 to the wave guides 1333 and 1334. For example, the optical devices 1382 and 1384 may be projectors. The optical devices 1382 and 1384 may be disposed adjacent to the at least one display 1350 or may be included in the at least one display 1350 as a portion of the at least one display 1350. The first optical device 1382 may correspond to the first display 1350-1, and the second optical device 1384 may correspond to the second display 1350-2. The first optical device 1382 may transmit light outputted from the first display 1350-1 to the first waveguide 1333, and the second optical device 1384 may transmit light outputted from the second display 1350-2 to the second waveguide 1334.

In an embodiment, a camera 1340 may include an eye tracking camera (ET CAM) 1340-1, a motion recognition camera 1340-2 and/or the photographing camera 1340-3. The photographing camera 1340-3, the eye tracking camera 1340-1, and the motion recognition camera 1340-2 may be disposed at different positions on the frame and may perform different functions. The photographing camera 1340-3, the eye tracking camera 1340-1, and the motion recognition camera 1340-2 may be an example of the camera 250 of FIG. 2. The eye tracking camera 1340-1 may output data indicating a gaze of the user wearing the wearable device 1300. For example, the wearable device 1300 may detect the gaze from an image including the user's pupil, obtained through the eye tracking camera 1340-1. An example in which the eye tracking camera 1340-1 is disposed toward the user's right eye is illustrated in FIG. 13B, but the embodiment is not limited thereto, and the eye tracking camera 1340-1 may be disposed alone toward the user's left eye or may be disposed toward two eyes.

In an embodiment, the photographing camera 1340-3 may photograph a real image or background to be matched with a virtual image in order to implement the augmented reality or mixed reality content. The photographing camera may photograph an image of a specific object existing at a position viewed by the user and may provide the image to the at least one display 1350. The at least one display 1350 may display one image in which a virtual image provided through the optical devices 1382 and 1384 is overlapped with information on the real image or background including the image of the specific object obtained by using the photographing camera. In an embodiment, the photographing camera may be disposed on the bridge 1303 disposed between the first rim 1301 and the second rim 1302.

In an embodiment, the eye tracking camera 1340-1 may implement a more realistic augmented reality by matching the user's gaze with the visual information provided on the at least one display 1350, by tracking the gaze of the user wearing the wearable device 1300. For example, when the user looks at the front, the wearable device 1300 may naturally display environment information associated with the user's front on the at least one display 1350 at a position where the user is positioned. The eye tracking camera 1340-1 may be configured to capture an image of the user's pupil in order to determine the user's gaze. For example, the eye tracking camera 1340-1 may receive gaze detection light reflected from the user's pupil and may track the user's gaze based on the position and movement of the received gaze detection light. In an embodiment, the eye tracking camera 1340-1 may be disposed at a position corresponding to the user's left and right eyes. For example, the eye tracking camera 1340-1 may be disposed in the first rim 1301 and/or the second rim 1302 to face the direction in which the user wearing the wearable device 1300 is positioned.

The motion recognition camera 1340-2 may provide a specific event to the screen provided on the at least one display 1350 by recognizing the movement of the whole or portion of the user's body, such as the user's torso, hand, or face. The motion recognition camera 1340-2 may obtain a signal corresponding to motion by recognizing the user's gesture, and may provide a display corresponding to the signal to the at least one display 1350. A processor (not illustrated) included in the wearable device 1300 may identify a signal corresponding to the operation and may perform a preset function based on the identification. In an embodiment, the motion recognition camera 1340-2 may be disposed on the first rim 1301 and/or the second rim 1302.

In an embodiment, the camera 1340 included in the wearable device 1300 is not limited to the above-described eye tracking camera 1340-1 and the motion recognition camera 1340-2. For example, the wearable device 1300 may identify an external object included in the FoV by using the photographing camera 1340-3 disposed toward the user's FoV. Identifying of the external object by the wearable device 1300 may be performed through an object identification application (e.g., the object detector 235). The wearable device 1300 may obtain a depth map, based on a sensor for identifying a distance between the wearable device 1300 and the external object, such as a depth sensor and/or a time of flight (ToF) sensor.

According to an embodiment, the wearable device 1300 may identify an external object in an image obtained through the camera 1340. The wearable device 1300 may identify a first image portion corresponding to an external object. The first image portion may be identified based on an area for the motion of the external object. For example, the area for the motion of the external object may be identified based on an area in which the motion of the external object (e.g., a cup, a mouse, and a fan of an electric fan) is observed for a specified time. The wearable device 1300 may not display a virtual object with respect to the first image portion. The wearable device 1300 may display the first image portion on the display 1350 to be overlapped with the virtual space. The wearable device 1300 may cease displaying, on the display 1350, the virtual space portion overlapping the first image portion.

According to an embodiment, a processor (not illustrated) included in the wearable device 1300 may identify the merging and/or division of the external object within the image obtained through the camera 1340. Based on the merging and/or division of the external object, the processor (not illustrated) may change an object area. The processor may not display, on the display 1350, a virtual object on the object area. The processor (not illustrated) may store information on the merging and/or division of the external object with respect to metadata on the external object.

According to an embodiment, the battery module 1370 may supply power to electronic components of the wearable device 1300. In an embodiment, the battery module 1370 may be disposed in the first temple 1304 and/or the second temple 1305. For example, the battery module 1370 may be a plurality of battery modules 1370. The plurality of battery modules 1370, respectively, may be disposed on each of the first temple 1304 and the second temple 1305. In an embodiment, the battery module 1370 may be disposed at an end of the first temple 1304 and/or the second temple 1305.

According to an embodiment, the antenna module 1375 may transmit the signal or power to the outside of the wearable device 1300 or may receive the signal or power from the outside. The antenna module 1375 may be electrically and/or operably connected to communication circuitry (e.g., the communication circuitry 270 of FIG. 2) in the wearable device 1300. In an embodiment, the antenna module 1375 may be disposed in the first temple 1304 and/or the second temple 1305. For example, the antenna module 1375 may be disposed close to one surface of the first temple 1304 and/or the second temple 1305.

According to an embodiment, the speaker 1392-1 and 1392-2 may output a sound signal to the outside of the wearable device 1300. A sound output module may be referred to as a speaker. In an embodiment, the speaker 1392-1 and 1392-2 may be disposed in the first temple 1304 and/or the second temple 1305 in order to be disposed adjacent to the ear of the user wearing the wearable device 1300. For example, the wearable device 1300 may include a second speaker 1392-2 disposed adjacent to the user's left ear by being disposed in the first temple 1304, and a first speaker 1392-1 disposed adjacent to the user's right ear by being disposed in the second temple 1305.

Referring to FIG. 13B, according to an embodiment, the wearable device 1300 may include the printed circuit board (PCB) 1390. The PCB 1390 may be included in at least one of the first temple 1304 or the second temple 1305. The PCB 1390 may include an interposer disposed between at least two sub PCBs. On the PCB 1390, one or more hardware (e.g., hardware described above with reference to FIG. 2) included in the wearable device 1300 may be disposed. The wearable device 1300 may include a flexible PCB (FPCB) for interconnecting the hardware.

According to an embodiment, the wearable device 1300 may include at least one of a gyro sensor, a gravity sensor, and/or an acceleration sensor for detecting the posture of the wearable device 1300 and/or the posture of a body part (e.g., a head) of the user wearing the wearable device 1300. Each of the gravity sensor and the acceleration sensor may measure gravity acceleration, and/or acceleration based on preset 3-dimensional axes (e.g., x-axis, y-axis, and z-axis) perpendicular to each other. The gyro sensor may measure angular velocity of each of preset 3-dimensional axes (e.g., x-axis, y-axis, and z-axis). At least one of the gravity sensor, the acceleration sensor, and the gyro sensor may be referred to as an inertial measurement unit (IMU). According to an embodiment, the wearable device 1300 may identify the user's motion and/or gesture performed to execute or stop a specific function of the wearable device 1300 based on the IMU. According to an embodiment, the wearable device 1300 may identify the changed location information of the user, based on the IMU. The wearable device 1300 may identify an object area having a spaced apart location, based on the changed location of the wearable device 1300.

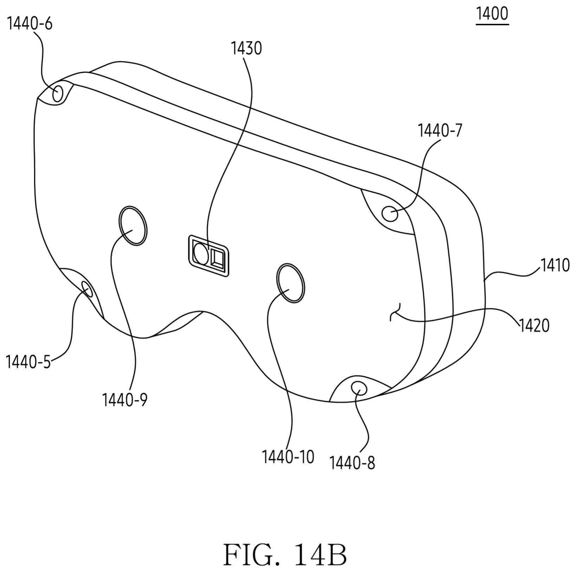

FIGS. 14A to 14B illustrate an example of an exterior of a wearable device 1400 according to an embodiment. The wearable device 101 of FIGS. 1 and 2 may include the wearable device 1400 of FIGS. 14A to 14B. The wearable device 101 performing the operations of FIG. 3 may include the wearable device 1400 of FIGS. 14A to 14B. The wearable device 101 performing the operations of FIGS. 4A to 9 may include the wearable device 1400 of FIGS. 14A to 14B. The wearable device 101 performing the operations of FIGS. 10A to 12 may include the wearable device 1400 of FIGS. 14A to 14B. According to an embodiment, an example of an exterior of a first surface 1410 of a housing of the wearable device 1400 may be illustrated in FIG. 14A, and an example of an exterior of a second surface 1420 opposite to first surface 1410 may be illustrated in FIG. 14B.

Referring to FIG. 14A, according to an embodiment, the first surface 1410 of the wearable device 1400 may have an attachable shape on the user's body part (e.g., the user's face). Although not illustrated, the wearable device 1400 may further include a strap for being fixed on the user's body part, and/or one or more temples (e.g., the first temple 1304 and/or the second temple 1305 of FIGS. 13A to 13B). A first display 1450-1 for outputting an image to the left eye among the user's two eyes and a second display 1450-2 for outputting an image to the right eye among the user's two eyes may be disposed on the first surface 1410. The wearable device 1400 may further include rubber or silicon packing, which are formed on the first surface 1410, for preventing interference by light (e.g., ambient light) different from the light emitted from the first display 1450-1 and the second display 1450-2.

According to an embodiment, the wearable device 1400 may include cameras 1440-3 and 1440-4 for photographing and/or tracking two eyes of the user adjacent to each of the first display 1450-1 and the second display 1450-2. The cameras 1440-3 and 1440-4 may be referred to as an ET camera. According to an embodiment, the wearable device 1400 may include cameras 1440-1 and 1440-2 for photographing and/or recognizing the user's face. The cameras 1440-1 and 1440-2 may be referred to as a FT camera.

Referring to FIG. 14B, a camera (e.g., cameras 1440-5, 1440-6, 1440-7, 1440-8, 1440-9, and 1440-10), and/or a sensor (e.g., the depth sensor 1430) for obtaining information associated with the external environment of the wearable device 1400 may be disposed on the second surface 1420 opposite to the first surface 1410 of FIG. 14A. For example, the cameras 1440-5, 1440-6, 1440-7, 1440-8, 1440-9, and 1440-10 may be disposed on the second surface 1420 in order to recognize an external object. For example, by using cameras 1440-9 and 1440-10, the wearable device 1400 may obtain an image and/or media to be transmitted to each of the user's two eyes. The camera 1440-9 may be disposed on the second surface 1420 of the wearable device 1400 to obtain a frame to be displayed through the second display 1450-2 corresponding to the right eye among the two eyes. The camera 1440-10 may be disposed on the second surface 1420 of the wearable device 1400 to obtain a frame to be displayed through the first display 1450-1 corresponding to the left eye among the two eyes.

In an embodiment, a camera (e.g., cameras 1440-5, 1440-6, 1440-7, 1440-8, 1440-9, and 1440-10) for obtaining information associated with the external environment included in the wearable device 1400 may be disposed toward the user's FoV. By using the camera (e.g., cameras 1440-5, 1440-6, 1440-7, 1440-8, 1440-9, and 1440-10) included in the wearable device 1400, the wearable device 1400 may identify an external object included in the FoV. Identifying of the external object by the wearable device 1400 may be performed through an object identification application (e.g., the object detector 235 of FIG. 2). The wearable device 1400 may obtain a depth map based on a sensor for identifying a distance between the wearable device 1400 and an external object, such as a depth sensor and/or a time of flight (ToF) sensor. Based on the depth map, the wearable device 1400 may identify an object area corresponding to the external object. The wearable device 1400 may display, through the displays 1450-1 and 1450-2, an image portion corresponding to an external object of the image obtained from the camera (e.g., cameras 1440-5, 1440-6, 1440-7, 1440-8, 1440-9, and 1440-10). The image portion may correspond to an object area.

According to an embodiment, the wearable device 1400 may include the depth sensor 1430 disposed on the second surface 1420 in order to identify a distance between the wearable device 1400 and the external object. By using the depth sensor 1430, the wearable device 1400 may obtain spatial information (e.g., a depth map) about at least a portion of the FoV of the user wearing the wearable device 1400.

According to an embodiment, a processor (not illustrated) included in the wearable device 1400 may identify merging and/or a segmentation of the external object in the image obtained through the cameras 1440-5, 1440-6, 1440-7, 1440-8, 1440-9, and 1440-10. Based on the merging and/or the segmentation of the external object, the processor (not illustrated) may change an object area. The processor (not illustrated) may display the object area together with a virtual space on the displays 1450-1 and 1450-2. The processor (not illustrated) may store information on the merging and/or the segmentation of the external object with respect to metadata on the external object. According to the merging of the first external object and a second external object, the first object area and the second object area may be merged. According to separation of the first external object and the second external object, the first object area and the second object area may be separated.

According to an embodiment, the wearable device 1400 may include at least one of a gyro sensor, a gravity sensor, and/or an acceleration sensor for detecting a posture of the wearable device 1400 and/or a posture of a body part (e.g., a head) of a user wearing the wearable device 1400. Each of the gravity sensor and the acceleration sensor may measure gravitational acceleration and/or acceleration based on designated three-dimensional axes (e.g., an x-axis, a y-axis, and a z-axis) perpendicular to each other. The gyro sensor may measure an angular velocity of each of the designated three-dimensional axes (e.g., the x-axis, the y-axis, and the z-axis). At least one of the gravity sensor, the acceleration sensor, and the gyro sensor may be referred to as an inertial measurement unit (IMU). According to an embodiment, the wearable device 1400 may, based on the IMU, identify a motion and/or a gesture of the user performed to execute or cease a designated function of the wearable device 1400. According to an embodiment, the wearable device 1400 may, based on the IMU, identify changed position information of the user. The wearable device 1400 may identify an object area having a spaced position, based on the changed position of the wearable device 1400. The effects that may be obtained from the present disclosure are not limited to those described above, and any other effects not mentioned herein will be clearly understood by those having ordinary knowledge in the art to which the present disclosure belongs, from the following description. According to an embodiment, the wearable device 101 may change the PT area to include an external object changed based on a change in a shape of the external object.

According to an embodiment, the wearable device 101 may change the PT area to include the external object changed based on the change in the position of the external object. For example, when a PT area is generated with respect to an object (e.g., a fan of an electric fan) that repeats a designated motion, the PT area may be an area with respect to the movement of the external object. As an example, the area regarding the movement may be an area in which the external object is positioned for a designated time. As an example, the area regarding the movement may be an area in which the movement is expected.

According to an embodiment, the wearable device 101 may change the PT area to include the external object changed based on a change in a depth of the external object. For example, when the shape of the external object (e.g., a window, and a door) is changed by the window or the door being opened or closed, the PT area may change. However, the changed PT area may correspond to the external object (e.g., the window, and the door). In embodiments, a wearable device 101 is provided. The wearable device 101 may comprise a camera 250, memory 230, a display 240, and at least one processor 220. The at least one processor 220 may be configured to receive an input for requesting to display an external object located in an external space around the wearable device 101 on the display 240 while a virtual space is displayed on the display 240. The at least one processor 220 may be configured to identify metadata corresponding to the external object designated by the input. The at least one processor 220 may be configured to, based on the identification of the metadata, identify, from the metadata, a first area regarding movement of the external object. The at least one processor 220 may be configured to, in a first image obtained through the camera 250, identify a first image portion 403 and 709 of the first image corresponding to the first area. The at least one processor 220 may be configured to change a first virtual-space portion, which corresponds to the first area within the virtual space and is displayed on the display 240, into the first image portion 403 and 709 of the first image. The first image portion 403 and 709 of the first image may include a visual object corresponding to the external object.

According to an embodiment, the at least one processor 220 may be configured to, while the first image portion 403 of the first image is displayed on the display 240, obtain a second image through the camera 250.

The at least one processor 220 may be configured to, in the second image, identify a second image portion 405 corresponding to a second area regarding movement of the external object. The at least one processor 220 may be configured to, based on identifying, from the second image, the second image portion 405 having a position spaced apart from the first image portion 403 of the first image, change a second virtual-space portion within the virtual space displayed on the display 240 into the second image portion 405 of the second image. The second image portion 405 of the second image may include a visual object corresponding to the external object in the second image.

According to an embodiment, the at least one processor 220 may be configured to, in a state in which the first image portion 403 of the first image is displayed on the display 240 based on a position of the first image portion 403 in the first image, cease displaying the first image portion 403 of the first image on the display 240. The at least one processor 220 may be configured to, based on a position of the second image portion 405 in the second image, display the second image portion 405 of the second image on the display 240.

According to an embodiment, the at least one processor 220 may be configured to, based on the metadata and a third image obtained through the camera 250 that includes the external object, identify a third image portion 713 of the third image corresponding to the first area. The at least one processor 220 may be configured to, based on the metadata and the third image, identify a fourth image portion 715 of the third image corresponding to a third area of another part of the external object. The at least one processor 220 may be configured to display the third image portion 713 and the fourth image portion 715 on the display 240. The third image portion 713 of the third image may include a first visual object corresponding to a part of the external object. The fourth image portion 715 of the third image may include a second visual object corresponding to another part of the external object.

According to an embodiment, a distance between the third image portion 713 of the third image and the fourth image portion 715 of the third image may be greater than or equal to a reference value. The third image portion 713 of the third image and the fourth image portion 715 of the third image may be spaced apart from each other. Information indicating a segmentation of the external object with respect to the metadata for the third image portion 713 and the metadata for the fourth image portion 715 may be configured to store in the memory.

According to an embodiment, the at least one processor 220 may be configured to, in response to identifying at least one of a part of the external object corresponding to the third image portion 713 of the third image or another part of the external object corresponding to the fourth image portion 715 of the third image, identify, based on the information indicating the segmentation stored in the metadata, the third image portion 713 that includes the first visual object corresponding to the part of the external object and the fourth image portion 715 that includes the second visual object corresponding to the other part of the external object.

According to an embodiment, the external object may be a first external object. The at least one processor 220 may be configured to, in a state of displaying the first image portion together with a fifth image portion of the first image corresponding to an area regarding movement of a second external object, identify a position of the fifth image portion and a position of the first image portion in the first image. The at least one processor 220 may be configured to, based on identifying a distance between the position of the first image portion and the position of the fifth image portion within the first image, display a sixth image portion of the first image that includes the first image portion and the fifth image portion on the display 240. The at least one processor 220 may be configured to store, in the metadata corresponding to the first external object and the second external object, information indicating a combination of the first external object and the second external object in the memory.

According to an embodiment, the first image portion of the first image and the fifth image portion of the first image may at least partially overlap. The sixth image portion of the first image may include the first image portion, the fifth image portion, and a portion that connects the first image portion and the fifth image portion.

According to an embodiment, the at least one processor 220 may be configured to change the first virtual-space portion displayed on the display into the first image portion 403 and 709 of the first image by display-overlapping the first image portion 403 and 709 of the first image on the first virtual-space portion.

According to an embodiment, the at least one processor 220 may be configured to change the first virtual-space portion displayed on the display 240 into the first image portion 403 and 709 of the first image by ceasing display of the first virtual-space portion and displaying the first image portion 403 and 709 of the first image.

In embodiments, a wearable device is provided. The wearable device may comprise a camera 250, memory 230, a display 240, and at least one processor 220. The at least one processor 220 may be configured to receive an input for designating that an external object is to be displayed through the display 240 while a virtual space is displayed on the display 240. The at least one processor 220 may be configured to, based on the input, identify, in a first image obtained through the camera 250, metadata that includes the external object and characteristics and a size of the external object. The at least one processor 220 may be configured to change a first virtual-space portion, which corresponds to the first area within the virtual space and is displayed on the display into a first object area, which is identified based on the metadata and corresponds to a first area regarding movement of the external object. The first object area 403, and 709 may include a visual object corresponding to the external object.

According to an embodiment, the at least one processor 220 may be configured to, while the first object area 403 is displayed on the display 240, obtain a second image through the camera 250. The at least one processor 220 may be configured to, in the second image, identify a second object area 405 corresponding to an area regarding movement of the external object. The at least one processor 220 may be configured to, based on identifying, from the second image, the second object area having a position spaced apart from the first object area, change a second virtual-space portion within the virtual space displayed the display 240 into the second object area 405. The second object 405 area may include a visual object corresponding to the external object in the second image.

According to an embodiment, the at least one processor 220 may be configured to, in a state in which the first object area 403 is displayed on the display 240 based on a position of the first object area 403, cease to display the first object area 403 on the display 240.

The at least one processor 220 may be configured to, based on a position of the second object area 405 in the second image, display the second object area 405 on the display 240.

According to an embodiment, the at least one processor 220 may be configured to, based on the metadata and a third image obtained through the camera 250 that includes the external object, identify a third object area 715 of the third image corresponding to the first area. The at least one processor 220 may be configured to, based on the metadata and the third image, identify a fourth object area 715 of the third image corresponding to a third area of another part of the external object. The at least one processor 220 may be configured to display the third object area 713 and the fourth object area 715 on the display 240.

According to an embodiment, a distance between the third object area 713 and the fourth object area 715 may be greater than or equal to a reference value. The third object area 713 and the fourth object area 715 may be spaced apart from each other. Information indicating a segmentation of the external object with respect to the metadata for the third object area 713 and the fourth object area 715 portion may be configured to store in the memory 230.

According to an embodiment, the at least one processor 220 may be configured to, in response to identifying at least one of a part of the external object corresponding to the third object area 713 or another part of the external object corresponding to the fourth object area 715 in the third image obtained from the camera 250, identify the third object area 713 including the first visual object indicated by information indicating the segmentation stored in the metadata and corresponding to a part of the external object, and the fourth object area 715 including the second visual object corresponding to another part of the external object.

According to an embodiment, the external object may be a first external object. The at least one processor 220 may be configured to, in a state of displaying the first image portion together with a fifth image portion of the first image corresponding to an area regarding movement of a second external object, identify a position of the fifth object area and a position of the first object area in the first image. The at least one processor 220 may be configured to, based on identifying a distance between the position of the first object area and the position of the fifth object area less than a reference value, display a sixth object area that includes the first object area and the fifth object area on the display 240. The at least one processor 220 may be configured to store, in the metadata corresponding to the first external object and the second external object, information indicating a combination of the first external object and the second external object in the memory 230.

According to an embodiment, the first object area and the fifth object area at least may partially overlap. The sixth object area may include the first object area, the fifth object area, and a portion that connects the first object area and the fifth object area.

According to an embodiment, the at least one processor 220 may be configured to change the first virtual-space portion displayed on the display 240 into the first area 403 and 709 by display overlapping the first object area 403 and 709 on the first virtual-space portion.

According to an embodiment, the at least one processor 220 may be configured to change the first virtual-space portion displayed on the display 240 into the first object area 403 and 709 by ceasing display of the first virtual-space portion and displaying the first object area 403 and 709.

In embodiments, a method performed by a wearable device 101 is provided. The method may comprise, while a virtual space is displayed on a display 240, receiving an input for requesting to display an external object located in an external space around the wearable device on the display 240. The method may comprise identifying metadata corresponding to the external object designated by the input. The method may comprise, based on the identification of the metadata, identifying, from the metadata, a first area regarding movement of the external object. The method may comprise, in a first image obtained through the camera 250, identifying a first image portion 403 and 709 of the first image corresponding to the first area. The method may comprise changing a first virtual-space portion, which corresponds to the first area within the virtual space and is displayed on the display 240, into the first image portion 403 and 709 of the first image. The first image portion 403 and 709 of the first image may include a visual object corresponding to the external object.

According to an embodiment, the method may comprise, while the first image portion 403 of the first image is displayed on the display 240, obtaining a second image through the camera 250. The method may comprise, in the second image, identifying a second image portion 405 corresponding to a second area regarding movement of the external object. The method may further comprise, based on identifying, from the second image, the second image portion 405 having a position spaced apart from the first image portion 403 of the first image, changing a second virtual-space portion within the virtual space displayed on the display 240 into the second image portion 405 of the second image. The second image portion 405 of the second image may include a visual object corresponding to the external object in the second image.

According to an embodiment, in a state in which the first image portion 403 of the first image is displayed on the display 240 based on a position of the first image portion 403 in the first image, ceasing displaying the first image portion 403 of the first image on the display 240 may be included. Based on a position of the second image portion 405 in the second image, displaying the second image portion 405 of the second image on the display 240 may be included.

According to an embodiment, the method may comprise, based on the metadata and a third image obtained through the camera 250 that includes the external object, identifying a third image portion 713 of the third image corresponding to the first area. The method may comprise, based on the metadata and the third image, identifying a fourth image portion 715 of the third image corresponding to a third area of another part of the external object. The method may comprise displaying the third image portion 713 and the fourth image portion 715 on the display 240. The third image portion 713 of the third image may include a first visual object corresponding to a part of the external object. The fourth image portion 715 of the third image may include a second visual object corresponding to another part of the external object.

According to an embodiment, a wearable device may additionally comprise an inertial sensor. The at least one processor 220 may identify a position of the wearable device 101 through the inertial sensor. The at least one processor 220 may be configured to, based on the designated motion of the wearable device 101, identify the second portion 405 having a position spaced apart from the first portion 403.

According to embodiments, the wearable device may additionally comprise an inertial sensor. The at least one processor 220 may be configured to identify the position of the wearable device 101 through the inertial sensor. The at least one processor 220 may be configured to, based on the designated motion of the wearable device 101, identify the second object area 405 having a position spaced apart from the first object area 403.

According to an embodiment, a wearable device is provided. The wearable device may comprise a camera, a display, at least one processor, and memory that stores instructions. The instructions, when executed by the at least one processor, may cause the wearable device to receive an input for requesting to display an external object located in an external space around the wearable device on the display while a virtual space is displayed on the display, identify metadata corresponding to the external object designated by the input, based on the identification of the metadata, identify, from the metadata, a first area regarding movement of the external object, in a first image obtained through the camera, identify a first image portion of the first image corresponding to the first area, and change a first virtual-space portion, which corresponds to the first area within the virtual space and is displayed on the display, into the first image portion of the first image. The first image portion of the first image may include a visual object corresponding to the external object.

According to an embodiment, the instructions, when executed by the at least one processor, may cause the wearable device to, while the first image portion of the first image is displayed on the display, obtain a second image through the camera, in the second image, identify a second image portion corresponding to a second area regarding movement of the external object, based on identifying, from the second image, the second image portion having a position spaced apart from the first image portion of the first image, change a second virtual-space portion within the virtual space displayed on the display into the second image portion of the second image. The second image portion of the second image may include a visual object corresponding to the external object in the second image.

According to an embodiment, the instructions, when executed by the at least one processor, may cause the wearable device to, in a state in which the first image portion of the first image is displayed on the display based on a position of the first image portion in the first image, cease displaying the first image portion of the first image on the display, based on a position of the second image portion in the second image, display the second image portion of the second image on the display.

According to an embodiment, the instructions, when executed by the at least one processor, may cause the wearable device to, based on the metadata and a third image obtained through the camera that includes the external object, identify a third image portion of the third image corresponding to the first area, based on the metadata and the third image, identify a fourth image portion of the third image corresponding to a third area of another part of the external object, and display the third image portion and the fourth image portion on the display. The third image portion of the third image may include a first visual object corresponding to a part of the external object. The fourth image portion of the third image may include a second visual object corresponding to another part of the external object.

According to an embodiment, a distance between the third image portion of the third image and the fourth image portion of the third image may be greater than or equal to a reference value, the third image portion of the third image and the fourth image portion of the third image may be spaced apart from each other. The instructions, when executed by the at least one processor, may cause the wearable device to store, in the memory, information indicating a segmentation of the external object with respect to the metadata for the third image portion and the metadata for the fourth image portion. The instructions, when executed by the at least one processor, may cause the wearable device to, in response to identifying at least one of a part of the external object corresponding to the third image portion of the third image or another part of the external object corresponding to the fourth image portion of the third image, identify, based on the information indicating the segmentation stored in the metadata, the third image portion that includes the first visual object corresponding to the part of the external object and the fourth image portion that includes the second visual object corresponding to the other part of the external object.

According to an embodiment, the external object may be a first external object, the instructions, when executed by the at least one processor, may cause the wearable device to, in a state of displaying the first image portion together with a fifth image portion of the first image corresponding to an area regarding movement of a second external object, identify a position of the fifth image portion and a position of the first image portion in the first image, based on identifying a distance between the position of the first image portion and the position of the fifth image portion within the first image portion, display a sixth image portion of the first image that includes the first image portion and the fifth image portion on the display, and store, in the metadata corresponding to the first external object and the second external object, information indicating a combination of the first external object and the second external object in the memory.

According to an embodiment, the first image portion of the first image and the fifth image portion of the first image may at least partially overlap. The sixth image portion of the first image may include the first image portion, the fifth image portion, and a portion that connects the first image portion and the fifth image portion.

According to an embodiment, the instructions, when executed by the at least one processor, may cause the wearable device to change the first virtual-space portion displayed on the display into the first image portion of the first image by display-overlapping the first image portion of the first image on the first virtual-space portion.

According to an embodiment, the instructions, when executed by the at least one processor, may cause the wearable device to change the first virtual-space portion displayed on the display into the first image portion of the first image by ceasing display of the first virtual-space portion and displaying the first image portion of the first image.

In embodiments, a wearable device is provided. The wearable device may comprise a camera, a display, at least one processor, and memory that stores instructions. The instructions, when executed by the at least one processor, may cause the wearable device to receive an input for designating that an external object is to be displayed through the display while a virtual space is displayed on the display, based on the input, identify, in a first image obtained through the camera, metadata that includes the external object and characteristics and a size of the external object, and change a first virtual-space portion, which corresponds to the first area within the virtual space and is displayed on the display into a first object area, which is identified based on the metadata and corresponds to a first area regarding movement of the external object. The first object area may include a visual object corresponding to the external object.

According to an embodiment, the instructions, when executed by the at least one processor, may cause the wearable device to, while the first object area is displayed on the display, obtain a second image through the camera, in the second image, identify a second object area corresponding to an area regarding movement of the external object, based on identifying, from the second image, that the second object area has a position spaced apart from the first object area, change a second virtual-space portion within the virtual space displayed on the display into the second object area. The second object area may include a visual object corresponding to the external object in the second image.

According to an embodiment, the instructions, when executed by the at least one processor, may cause the wearable device to, in a state in which the first object area is displayed on the display based on a position of the first object area, cease to display the first object area on the display, based on a position of the second object area in the second image, display the second object area on the display.

According to an embodiment, the instructions, when executed by the at least one processor, may cause the wearable device to, based on the metadata and a third image obtained through the camera that includes the external object, identify a third object area of the third image corresponding to the first area, based on the metadata and the third image, identify a fourth object area of the third image corresponding to a third area of another part of the external object, and display the third object area and the fourth object area on the display.

According to embodiments, a distance between the third object area and the fourth object area may be greater than or equal to a reference value, the third object area and the fourth object area may be spaced apart from each other. The instructions, when executed by the at least one processor, may cause the wearable device to store, in the memory, information indicating a segmentation of the external object with respect to the metadata for the third object area and the metadata for the fourth object area.

According to embodiments, a non-transitory computer-readable recording medium is provided. The non-transitory computer-readable recording medium may store instructions to, when executed by the at least one processor, cause a device to perform operations comprising, while a virtual space is displayed on a display, receiving an input for requesting to display an external object positioned in an external space around the wearable device on the display, identifying metadata corresponding to the external object designated by the input, based on the identification of the metadata, identifying, from the metadata, a first area regarding movement of the external object, in a first image obtained through a camera, identifying a first image portion of the first image corresponding to the first area, and changing a first virtual space portion, which corresponds to the first area within the virtual space and is displayed on the display, into the first image portion of the first image. The first image portion of the first image may include a visual object corresponding to the external object.

In embodiments, a non-transitory computer-readable recording medium is provided. The non-transitory computer-readable recording medium may store instructions to, when executed by the at least one processor, cause a device to perform operations comprising receiving an input designating that an external object is to be displayed through the display while a virtual space is displayed on the display, based on the input, identifying, in a first image obtained through a camera, metadata that includes the external object and characteristics and a size of the external object, and changing a first virtual-space portion, which corresponds to the first area within the virtual space and is displayed on the display into a first object area, which is identified based on the metadata and corresponds to a first area regarding movement of the external object. The first object area may include a visual object corresponding to the external object. Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, a compact disc-ROM (CD-ROM), an optical storage device (digital versatile discs (DVDs) or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

## Claims

1. A wearable device, comprising:
a camera;
a display;
at least one processor; and
memory storing instructions,
wherein the instructions, when executed by the at least one processor, cause the wearable device to:
receive an input for requesting to display an external object located in an external space around the wearable device on the display while a virtual space is displayed on the display;
identify metadata corresponding to the external object designated by the input;
based on the identification of the metadata, identify, from the metadata, a first area regarding movement of the external object;
identify a first image portion corresponding to the first area in a first image obtained through the camera; and
change a first virtual-space portion, which corresponds to the first area within the virtual space and is displayed on the display, into the first image portion of the first image,
wherein the first image portion of the first image includes a visual object corresponding to the external object.

2. The wearable device of Claim 1, wherein the instructions, when executed by the at least one processor, cause the wearable device to:
while the first image portion of the first image is displayed on the display, obtain a second image through the camera;
in the second image, identify a second image portion corresponding to a second area regarding movement of the external object; and
based on identifying, from the second image, the second image portion having a position spaced apart from the first image portion of the first image, change a second virtual-space portion within the virtual space displayed on the display into the second image portion of the second image, and
wherein the second image portion of the second image includes a visual object corresponding to the external object in the second image.

3. The wearable device of any one of Claims 1 to 2, wherein the instructions, when executed by the at least one processor, cause the wearable device to:
in a state in which the first image portion of the first image is displayed on the display based on a position of the first image portion in the first image, cease displaying the first image portion of the first image on the display; and
based on a position of the second image portion in the second image, display the second image portion of the second image on the display.

4. The wearable device of any one of Claims 1 to 3, wherein the instructions, when executed by the at least one processor, cause the wearable device to:
based on the metadata and a third image obtained through the camera that includes the external object, identify a third image portion of the third image corresponding to the first area;
based on the metadata and the third image, identify a fourth image portion of the third image corresponding to a third area of another part of the external object; and
display the third image portion and the fourth image portion on the display,
wherein the third image portion of the third image includes a first visual object corresponding to a part of the external object, and the fourth image portion of the third image includes a second visual object corresponding to another part of the external object.

5. The wearable device of any one of Claims 1 to 4,
wherein a distance between the third image portion of the third image and the fourth image portion of the third image is greater than or equal to a reference value, and
wherein the third image portion of the third image and the fourth image portion of the third image are spaced apart from each other, and
wherein the instructions, when executed by the at least one processor, cause the wearable device to store, in the memory, information indicating a segmentation of the external object with respect to the metadata for the third image portion and the metadata for the fourth image portion.

6. The wearable device of any one of Claims 1 to 5, wherein the instructions, when executed by the at least one processor, cause the wearable device to:
in response to identifying at least one of (i) a part of the external object corresponding to the third image portion of the third image or (ii) another part of the external object corresponding to the fourth image portion of the third image, identify, based on the information indicating the segmentation of the external object stored in the metadata, the third image portion that includes the first visual object corresponding to the part of the external object and the fourth image portion that includes the second visual object corresponding to the other part of the external object.

7. The wearable device of any one of Claims 1 to 6,
wherein the external object is a first external object, and
wherein the instructions, when executed by the at least one processor, cause the wearable device to:
in a state of displaying the first image portion together with a fifth image portion of the first image corresponding to an area regarding movement of a second external object, identify a position of the fifth image portion and a position of the first image portion in the first image;
based on identifying a distance between the position of the first image portion and the position of the fifth image portion within the first image, display a sixth image portion of the first image that includes the first image portion and the fifth image portion, on the display; and
store, in the metadata corresponding to the first external object and the second external object, information indicating a combination of the first external object and the second external object in the memory.

8. The wearable device of any one of Claims 1 to 7, wherein:
the first image portion of the first image and the fifth image portion of the first image at least partially overlap; and
the sixth image portion of the first image includes the first image portion, the fifth image portion, and a portion that connects the first image portion and the fifth image portion.

9. The wearable device of any one of Claims 1 to 8, wherein the instructions, when executed by the at least one processor, cause the wearable device to change the first virtual-space portion displayed on the display into the first image portion of the first image by display-overlapping the first image portion of the first image on the first virtual-space portion.

10. The wearable device of any one of Claims 1 to 9, wherein the instructions, when executed by the at least one processor, cause the wearable device to change the first virtual-space portion displayed on the display into the first image portion of the first image by ceasing display of the first virtual-space portion and displaying the first image portion of the first image.

11. A wearable device, comprising:
a camera;
a display;
at least one processor; and
memory that stores instructions,
wherein the instructions, when executed by the at least one processor, cause the wearable device to:
receive an input for designating that an external object is to be displayed through the display while a virtual space is displayed on the display;
based on the input, identify, in a first image obtained through the camera, metadata that includes the external object and characteristics and a size of the external object; and
change a first virtual-space portion, which corresponds to the first area within the virtual space and is displayed on the display into a first object area, which is identified based on the metadata and corresponds to a first area regarding movement of the external object,
wherein the first object area includes a visual object corresponding to the external object.

12. The wearable device of Claim 11, wherein the instructions, when executed by the at least one processor, cause the wearable device to:
while the first object area is displayed on the display, obtain a second image through the camera;
in the second image, identify a second object area corresponding to an area regarding movement of the external object; and
based on identifying, from the second image, the second object area having a position spaced apart from the first object area, change a second virtual-space portion within the virtual space displayed on the display into the second object area,
wherein the second object area includes a visual object corresponding to the external object in the second image.

13. The wearable device of any one of Claims 11 to 12, wherein the instructions, when executed by the at least one processor, cause the wearable device to:
in a state in which the first object area is displayed on the display based on a position of the first object area, cease to display the first object area on the display; and
based on a position of the second object area in the second image, display the second object area on the display.

14. The wearable device of any one of Claims 11 to 13, wherein the instructions, when executed by the at least one processor, cause the wearable device to:
based on the metadata and a third image obtained through the camera that includes the external object, identify a third object area of the third image corresponding to the first area; and
based on the metadata and the third image, identify a fourth object area of the third image corresponding to a third area of another part of the external object, and display the third object area and the fourth object area on the display.

15. A method performed by a wearable device, the method comprising:
while a virtual space is displayed on a display, receiving an input for requesting to display an external object located in an external space around the wearable device on the display;
identifying metadata corresponding to the external object designated by the input;
based on the identification of the metadata, identifying, from the metadata, a first area regarding movement of the external object;
in a first image obtained through a camera, identifying a first image portion of the first image corresponding to the first area; and
changing a first virtual space portion, which corresponds to the first area within the virtual space and is displayed on the display, into the first image portion of the first image,
wherein the first image portion of the first image includes a visual object corresponding to the external object.
